(19) Europäisches Patentamt / European Patent Office / Office européen des brevets

(11) **EP 4 674 915 A1**

(12) **EUROPEAN PATENT APPLICATION**
published in accordance with Art. 153(4) EPC

(43) Date of publication:
**07.01.2026 Bulletin 2026/02**

(21) Application number: **24763587.3**

(22) Date of filing: **13.02.2024**

(51) International Patent Classification (IPC):
**C08L 101/02** (2006.01)    **C08J 5/24** (2006.01)
**C08L 63/00** (2006.01)

(52) Cooperative Patent Classification (CPC):
**C08J 5/24; C08L 63/00; C08L 101/02**

(86) International application number:
**PCT/JP2024/004742**

(87) International publication number:
**WO 2024/181103 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023029756**

(71) Applicant: **Zeon Corporation
Tokyo 100-8246 (JP)**

(72) Inventor: **YAGYU, Sakyo
Tokyo 100-8246 (JP)**

(74) Representative: **Kraus & Lederer PartGmbB
Thomas-Wimmer-Ring 15
80539 München (DE)**

(54) **RESIN COMPOSITION, PREPREG, AND MOLDED OBJECT**

(57) To provide a resin composition configured to produce a molded body which is excellent in lightness in weight and in which a deterioration in physical properties is suppressed, and a prepreg and a molded body each produced by use of the resin composition. A resin composition comprising hollow particles and a matrix resin, wherein the hollow particles comprise a shell containing a resin and a hollow portion surrounded by the shell; the hollow particles have a void ratio of 50% or more; the hollow particles have a volume average particle diameter of more than 1.0 $\mu$m and 20.0 $\mu$m or less; and the hollow particles have an epoxy group amount per unit area of 1.0 $\mu$mol/m$^2$ or more, which is obtained from an epoxy value and specific surface area of the hollow particles, and wherein the matrix resin comprises a matrix resin containing a functional group which is reactive with an epoxy group.

## Description

Technical Field

The present disclosure relates to a resin composition comprising hollow particles. The present disclosure also relates to a prepreg and molded body each produced by use of the resin composition.

Background Art

Hollow particles have a hollow in their interior. Accordingly, they are added and used in resins, coating materials, various kinds of molded products and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

As the material for hollow particles, for example, a resin (e.g., vinyl resin, acrylic resin, epoxy resin, polyurethane resin, melamine resin), an inorganic material (e.g., silica) or the like is used. A resin composition obtained by incorporating such hollow particles in a matrix resin (e.g., a thermosetting or thermoplastic resin) or a fiber-reinforced molded body obtained by incorporating such hollow particles in a fiber reinforced plastic (FRP) is widely used in various kinds of fields.

For example, Patent Document 1 discloses a coating agent, a master pellet and so on, each comprising a thermosetting or thermoplastic resin and hollow particles comprising a shell containing a crosslinked copolymer which is derived from a copolymer of at least one radical reactive monomer containing an epoxy or oxetane group and at least one radical reactive monomer containing a silyl group.

Patent Document 2 discloses a low-dielectric material in which hollow epoxy resin fine particles are dispersed in an insulating resin.

Citation List

Patent Documents

Patent Document 1: Japanese Patent No. 5992598
Patent Document 2: Japanese Patent No. 4955960

Summary

Technical Problem

However, a resin composition mixed with hollow particles for the purpose of weight reduction and so on, has the following problem: its physical properties relating to external force strength, such as tensile elastic modulus and tensile strength, deteriorate compared to a resin composition that is free of hollow particles.

An object of the present disclosure is to provide a resin composition configured to produce a molded body which is excellent in lightness in weight and in which a deterioration in physical properties is suppressed. Another object of the present disclosure is to provide a prepreg and a molded body, both of which are produced by use of the resin composition.

Solution to Problem

The inventors of the present disclosure found the following: in a resin composition comprising hollow particles having a shell comprising a resin, when the hollow particles contain a specific amount or more of epoxy groups on the outer surface and when the matrix resin contains a functional group which is reactive with an epoxy group, a deterioration in the physical properties of a molded body comprising a cured product of the resin composition is suppressed. Based on this finding, they achieved the present disclosure.

According to the present disclosure, the following resin composition is provided.

[1] A resin composition comprising hollow particles and a matrix resin,

wherein the hollow particles comprise a shell containing a resin and a hollow portion surrounded by the shell; the hollow particles have a void ratio of 50% or more; the hollow particles have a volume average particle diameter of more than 1.0 $\mu$m and 20.0 $\mu$m or less; and the hollow particles have an epoxy group amount per unit area of 1.0

$\mu$mol/m$^2$ or more, which is obtained from an epoxy value and specific surface area of the hollow particles by the following formula (A):

Epoxy group amount ($\mu$mol/m$^2$) = Epoxy value ($\mu$mol/g) / Specific surface area (m$^2$/g)         Formula (A).

and
wherein the matrix resin comprises a matrix resin containing a functional group which is reactive with an epoxy group.

[2] The resin composition according to [1], wherein the functional group of the matrix resin is at least one selected from the group consisting of a hydroxy group, an amino group, an epoxy group, a carboxy group, a carboxylic anhydride group, a thiol group, an isocyanate group and a silanol group.

[3] The resin composition according to [1] or [2], wherein the matrix resin comprises at least one selected from the group consisting of an epoxy resin, a benzoxazine resin, a cyanate resin, a polyimide resin, a silicone resin, a polyester resin, a liquid crystal polymer (LCP), a modified polyolefin resin, a polyphenylene ether resin, a thiol resin, a polyurethane resin, a polyurea resin and raw material compounds thereof.

[4] The resin composition according to any one of [1] to [3], wherein the shell of the hollow particles contains, as the resin, a polymer of a radically polymerizable monomer.

[5] The resin composition according to [4], wherein, in 100% by mass of the radically polymerizable monomer, a content of a crosslinkable monomer containing two or more radically polymerizable groups per molecule, is 50% by mass or more.

[6] The resin composition according to any one of [1] to [3], wherein the shell of the hollow particles contains, as the resin, a cured product of an epoxy resin.

[7] The resin composition according to [6], wherein, in 100% by mass of the epoxy resin, a content of a crosslinkable epoxy resin containing two or more epoxy groups per molecule, is 50% by mass or more.

[8] The resin composition according to any one of [1] to [7], wherein a total content of a surfactant and water-soluble polymer stabilizer present on a surface of the hollow particles, is 100 ppm or less.

In addition, according to the present disclosure, the following prepreg and thermoplastic prepreg are provided.

[9] A prepreg obtained by impregnating a substrate with the resin composition defined by any one of [1] to [8] and heat-drying the resin composition of the substrate.

[10] A thermoplastic prepreg obtained by impregnating a substrate with the resin composition defined by any one of [1] to [8].

According to the present disclosure, the following molded body is also provided.

[11] A molded body comprising a cured product of the resin composition defined by any one of [1] to [8].

Advantageous Effects of Invention

According to the present disclosure described above, the resin composition which is excellent in lightness in weight and which is less likely to cause a deterioration in physical properties, is provided. Also, the present disclosure provides the prepreg obtained by impregnating a substrate with the resin composition and heat-drying the resin composition of the substrate, or the thermoplastic prepreg obtained by impregnating a substrate with the resin composition, as well as the molded body comprising the cured product of the resin composition.

Brief Description of Drawings

[FIG. 1] FIG. 1 is a diagram illustrating an example of the method for producing the hollow particles used in the present disclosure.

[FIG. 2] FIG. 2 is a diagram illustrating an example of the stirring apparatus used in the solvent removal step.

Description of Embodiments

Hereinafter, the resin composition, prepreg and molded body of the present disclosure will be described in detail.

In the present disclosure, "to" which shows a numerical range is used to describe a range in which the numerical values described before and after "to" indicate the lower limit value and the upper limit value, both of which are included in the numerical range.

1. Resin composition

The resin composition of the present disclosure is a resin composition comprising hollow particles and a matrix resin,

wherein the hollow particles comprise a shell containing a resin and a hollow portion surrounded by the shell; the hollow particles have a void ratio of 50% or more; the hollow particles have a volume average particle diameter of more than 1.0 $\mu$m and 20.0 $\mu$m or less; and the hollow particles have an epoxy group amount per unit area of 1.0 $\mu$mol/m$^2$ or more, which is obtained from an epoxy value and specific surface area of the hollow particles by the following formula (A):

Epoxy group amount ($\mu$mol/m$^2$) = Epoxy value ($\mu$mol/g) / Specific surface area (m$^2$/g)      Formula (A),

and

wherein the matrix resin comprises a matrix resin containing a functional group which is reactive with an epoxy group.

Compared to a resin composition free of hollow particles, a resin composition containing hollow particles causes a deterioration in the physical properties relating to external force strength, such as tensile elastic modulus and tensile strength, when formed into a molded body. This is thought to be due to peeling off of the interface between the matrix resin and the hollow particles, which is caused by poor adhesion between the hollow particles and the matrix resin, or due to poor dispersion of the hollow particles. Meanwhile, the molded body obtained by curing the resin composition of the present disclosure suppresses a deterioration in the physical properties, although it contains hollow particles. In the resin composition of the present disclosure, the particle diameter of the hollow particles is appropriately large, and the hollow particles and the matrix resin have high affinity for each other since the polarity of the hollow particles having the epoxy group is close to that of the matrix resin having the functional group, and the hollow particles have excellent dispersibility, accordingly. In addition, by curing the resin composition of the present disclosure, the epoxy group on the surface of the hollow particles reacts with the functional group of the matrix resin to form a covalent bond. Accordingly, in the molded body of the resin composition of the present disclosure, the hollow particles are uniformly dispersed, and the hollow particle surface is cross-linked to the matrix resin. As a result, the interface between the hollow particles and the matrix resin has excellent adhesion, and the interface between the hollow particles and the matrix resin is less likely to be peeled off.
In addition, in the resin composition of the present disclosure, the void ratio of the hollow particles is 50% or more and sufficiently high; the hollow particles are less likely to collapse; and the voids are likely to be retained. Therefore, an excellent weight reduction effect is exerted by the hollow particles. It is presumed that the collapse of the hollow particles is suppressed since a three-dimensional crosslinked structure is formed in the vicinity of the hollow particle surface after the epoxy group on the hollow particle surface reacts with the functional group of the matrix resin. Also, in the molded body of the resin composition of the present disclosure, since the hollow particles are uniformly dispersed, uniform pressure is likely to be applied when pressurized, and the collapse of the hollow particles is further suppressed, accordingly.
Hereinafter, the hollow particles contained in the resin composition of the present disclosure, the method for producing the hollow particles, and the matrix resin will be described in detail.

[Hollow particles]

The hollow particles used in the present disclosure comprise a shell containing a resin (outer shell) and a hollow portion surrounded by the shell. They have an epoxy group on the outer surface of the shell.
The hollow particles used in the present disclosure have an epoxy group amount per unit area of 1.0 $\mu$mol/m$^2$ or more, which is obtained from the epoxy value and specific surface area of the hollow particles by the following formula (A):

Epoxy group amount ($\mu$mol/m$^2$) = Epoxy value ($\mu$mol/g) / Specific surface area (m$^2$/g)      Formula (A).

In the present disclosure, the epoxy value of the hollow particles is measured by the potentiometric titration in accordance with JIS K 7236. The epoxy value is represented as a value with two significant digits, and the epoxy group amount is represented as a value rounded off to the first decimal place.
Also in the present disclosure, the specific surface area of the hollow particles can be calculated by the following formula (B) from the volume average particle diameter of the hollow particles and the apparent density $D_1$ thereof, on the supposition that the hollow particles are spherical. In the formula (B), each of the value of the volume average particle diameter and that of the apparent density $D_1$ is represented as a value with two significant digits, and the specific surface area is represented as a value rounded off to the first decimal place.

Specific surface area (m²/g) = 6/(Volume average particle diameter (m) × Apparent density $D_1$ (g/m³))        Formula (B)

The epoxy group amount can be used as the index of the amount of the epoxy group present on the outer surface of the hollow particles. The epoxy group amount of the hollow particles used in the present disclosure is only required to be 1.0 $\mu$mol/m² or more. From the viewpoint of suppressing a deterioration in the physical properties of the molded body by improving the adhesion between the hollow particles and the matrix resin, and from the viewpoint of improving the weight reduction effect of the hollow particles by suppressing the collapse of the hollow particles, the epoxy group amount is preferably 3.0 $\mu$mol/m² or more, and more preferably 5.0 $\mu$mol/m² or more. The upper limit of the epoxy group amount is not particularly limited. From the viewpoint of suppressing a decrease in the strength of the particles due to poor crosslinking reaction of the epoxy group, it is preferably 1000 $\mu$mol/m² or less, more preferably 750 $\mu$mol/m² or less, and still more preferably 500 $\mu$mol/m² or less.

As the resin contained in the shell of the hollow particles, for example, a polymer of a radically polymerizable monomer, a cured product obtained by curing an epoxy resin with a curing agent, a mixture thereof, or the like is preferably used.

When the shell contains the polymer of the radically polymerizable monomer, the epoxy group on the outer surface of the shell of the hollow particles is preferably an epoxy group contained in some of the monomer units forming the polymer. In the polymer of the radically polymerizable monomer, the epoxy group contained in the monomer unit may be an epoxy group already contained in a raw material monomer, or it may be an epoxy group introduced into some of the monomer units by modification treatment or the like after polymerization.

When the shell contains the cured product of the epoxy resin, the epoxy group on the outer surface of the shell of the hollow particles is preferably a residual epoxy group remaining unpolymerized.

As the mixture of the polymer of the radically polymerizable monomer and the cured product of the epoxy resin, examples include, but are not limited to, a composite resin that is obtained by polymerizing a radically polymerizable group contained in any of the following mixtures and then crosslinking an epoxy group contained therein: a mixture containing a radically polymerizable monomer, a polymerization initiator therefor, an epoxy resin and a curing agent therefor, and a mixture containing a monomer containing both a radically polymerizable group and an epoxy group, a polymerization initiator and a curing agent.

To the extent that does not impair the effects of the present disclosure, the shell of the hollow particles may further contain an additive which is different from the resin. In the case of containing the additive, the content of the resin in the shell is preferably 96% by mass or more, more preferably 97% by mass or more, still more preferably 98% by mass or more, and even more preferably 99% by mass or more.

In the hollow particles used in the present disclosure, the hollow portion is a hollow space clearly distinguished from the shell. The shell of the hollow particles may have a porous structure. In this case, the hollow portion has a size that is clearly distinguishable from many minute spaces uniformly dispersed in the porous structure. From the viewpoint of mechanical strength and so on, the hollow particles used in the present disclosure preferably have a solid shell.

From the viewpoint of weight reduction, the hollow portion of the hollow particles used in the present disclosure is preferably filled with gas such as air.

The hollow particles used in the present disclosure may have one hollow portion or two or more hollow portions. From the viewpoint of maintaining good balance between the high void ratio and the mechanical strength, the hollow particles preferably have only one or two hollow portions, and more preferably have only one hollow portion. In the hollow particles used in the present disclosure, the percentage of the number of the particles having only one or two hollow portions is preferably 90% or more, and more preferably 95% or more. Also, the percentage of the particles having only one hollow portion is preferably 90% or more, and more preferably 95% or more.

The shell of the hollow particles used in the present disclosure and, when the hollow particles have two or more hollow portions, a partition separating the adjacent hollow portions from each other may be porous. From the viewpoint of the strength, the shell and the partition are preferably solid.

The shape of the hollow particles used in the present disclosure may be a spherical shape, an ellipsoidal shape or an irregular shape, for example. From the viewpoint of the dispersibility, strength, pressure resistance and so on of the hollow particles, the shape is preferably a spherical shape.

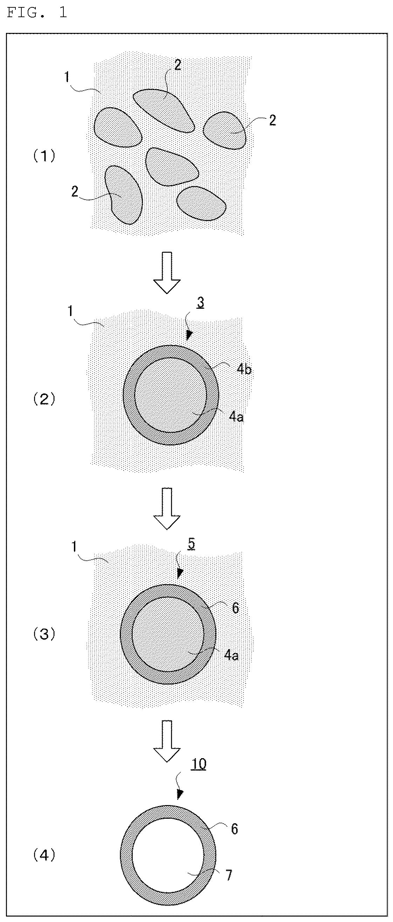

An exemplary image of the shape of the hollow particles used in the present disclosure, is a bag which is made of a thin film and inflated with gas. A cross-section of the bag is like the hollow particle 10 shown in the diagram (4) of FIG. 1. In this example, one thin film is provided on the outside, and the interior is filled with gas.

The hollow portion of the hollow particles can be determined by, for example, SEM observation of a cross section of the particles or TEM observation of the particles as they are. The shape of the particles can be determined by SEM or TEM observation of the hollow particles, for example.

The hollow particles used in the present disclosure may contain, as impurities, small amounts of particles having a low circularity, such as cracked or deformed particles. From the viewpoint of the dispersibility, strength and pressure resistance of the hollow particles and from the viewpoint of the lightness in weight of the hollow particles, in 100% by mass of the hollow particles, the percentage of the particles having a circularity of 0.85 or less is preferably 10% by mass or less, more preferably 7% by mass or less, and still more preferably 4% by mass or less.

The particles having a circularity of 0.85 or less are typically cracked particles or deformed particles such as dented particles. In the present disclosure, such particles may be referred to as "irregular-shaped particles". Such irregular-shaped particles have a low void ratio compared to spherical hollow particles; therefore, they are poor in lightness in weight. Accordingly, the lightness in weight of the hollow particles can be improved by decreasing the percentage of the irregular-shaped particles included in the hollow particles.

Also, the irregular-shaped particles have the following problem: compared to spherical particles, the irregular-shaped particles are poor in dispersibility since they are likely to aggregate when dispersed in the matrix resin. Therefore, the dispersibility of the hollow particles can be improved by decreasing the percentage of the irregular-shaped particles included in the hollow particles.

In addition, such irregular-shaped particles have the following problem: they are poor in pressure resistance compared to spherical particles, since external pressure is likely to be locally applied thereto. When the irregular-shaped particles are dispersed in the matrix resin, aggregates are likely to be formed; external pressure is likely to be applied to the aggregates; and the pressure resistance further deteriorates, accordingly. Therefore, the pressure resistance of the hollow particles can be improved by decreasing the percentage of the irregular-shaped particles included in the hollow particles.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles is more complex.

The average circularity of the hollow particles used in the present disclosure may be from 0.950 to 0.995.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The void ratio of the hollow particles used in the present disclosure is 50% or more. Accordingly, the hollow particles are excellent in lightness in weight, and they are excellent in heat insulation and so on. The void ratio of the hollow particles used in the present disclosure is preferably 60% or more, and more preferably 65%.

The upper limit of the void ratio of the hollow particles is not particularly limited. From the viewpoint of suppressing a decrease in the strength of the hollow particles and improving the collapse-resistance of the hollow particles, the void ratio is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

```
     Apparent density D₁

     = [Mass of the hollow particles] / (100 - [Mass of the isopropanol] / [Specific gravity of the isopropanol at the

  measuring temperature])   Formula (I)
```

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ ($g/cm^3$) of the hollow particles is calculated by the following formula (II).

True density $D_0$ = [Mass of the pulverized hollow particles]/(100 - [Mass of the isopropanol]/[Specific gravity of the isopropanol at the measuring temperature])    Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100 - (Apparent density $D_1$/True density $D_0$) $\times$ 100    Formula (III)

The volume average particle diameter of the hollow particles used in the present disclosure is more than 1.0 $\mu$m and 20.0 $\mu$m or less. From the viewpoint of improving the pressure resistance of the hollow particles, the volume average particle diameter of the hollow particles is preferably 1.5 $\mu$m or more, and more preferably 2.0 $\mu$m or more as the lower limit. On the other hand, from the viewpoint of suppressing a decrease in the strength of the molded body it is preferably 17.5 $\mu$m or less, more preferably 10.0 $\mu$m or less, and still more preferably 5.0 $\mu$m or less as the upper limit.

The particle size distribution (volume average particle diameter (Dv) / number average particle diameter (Dp)) of the hollow particles is not particularly limited. It is preferably 1.1 or more and 2.5 or less, and more preferably 1.1 or more and 2.0 or less. When the particle size distribution is equal to or less than the upper limit value, hollow particles such that performance slightly vary between the hollow particles, can be obtained. Also when the particle size distribution is equal to or less than the upper limit value, a product having uniform thickness can be produced in the case of producing, for example, a sheet-shaped molded body by use of the resin composition of the present disclosure.

The volume average particle diameter (Dv) and number average particle diameter (Dp) of the hollow particles can be found as follows, for example. The particle diameter of the hollow particles is measured with a particle size distribution measuring device by the Coulter counter method; the number average and volume average of the particle diameters are calculated; and the obtained values can be used as the number average particle diameter (Dp) and volume average particle diameter (Dv) of the hollow particles. The particle size distribution is found by dividing the volume average particle diameter by the number average particle diameter. The Coulter counter method is a method for measuring the diameter of particles by the electric resistance method called the Coulter Principle.

The thermal decomposition initiation temperature of the hollow particles used in the present disclosure is not particularly limited, and it is preferably 345°C or more, and more preferably 350°C or more. When the thermal decomposition initiation temperature is equal to or more than the lower limit value, the hollow particles are excellent in heat resistance. The upper limit of the thermal decomposition initiation temperature of the hollow particles is not particularly limited. For example, it may be 400°C or less.

In the present disclosure, the thermal decomposition initiation temperature of the hollow particles can be measured as a 5% weight reduction temperature, using a TG-DTA device in a nitrogen atmosphere, in the condition of a nitrogen flow rate of 230 mL/min and a temperature increase rate of 10°C/min.

In the hollow particles used in the present disclosure, the total content of the surfactant and water-soluble polymer stabilizer (hereinafter, they are simply referred to as "surfactant and so on") present on the particle surface is preferably 100 ppm or less, more preferably 70 ppm or less, still more preferably 50 ppm or less, and even more preferably 30 ppm or less. The water-soluble polymer stabilizer may be an organic or inorganic water-soluble polymer stabilizer. When the content of the surfactant and so on present on the surface of the hollow particles, is equal to or less than the upper limit value, a decrease in the reactivity between the hollow particles and the matrix resin is suppressed, and the adhesion between the hollow particles and the matrix resin is improved, accordingly. As a result, a deterioration in the physical properties of the molded body is suppressed; the collapse of the hollow particles is suppressed; and the weight reduction effect is improved. By using only the inorganic dispersion stabilizer as the dispersion stabilizer in the below-described process of producing the hollow particles, the content of the surfactant and so on present on the surface of the hollow particles can be adjusted to less than the measurement limit value.

In the present disclosure, the content of the surfactant and so on present on the surface of the hollow particles is the proportion of the mass of the surfactant and so on present on the surface of the hollow particles to the mass of the hollow particles. The surfactant and so on present on the surface of the hollow particles can be extracted by, for example, ultrasonic treatment of the hollow particles in water. The type and mass of the surfactant and so on extracted into water can be identified by the peak position and peak intensity of a $^1$H-NMR spectrum. In this method, the measuring limit of the amount of the surfactant and so on present on the surface of the hollow particles, is generally 0.05 ppm.

In the resin composition of the present disclosure, the content of the hollow particles is not particularly limited. In 100% by mass of the total solid content of the resin composition, the content of the hollow particles is preferably 5% by mass or more, and more preferably 10% by mass or more as the lower limit. On the other hand, the content of the hollow particles is preferably 50% by mass or less, more preferably 30% by mass or less, still more preferably 20% by mass or less, and even more preferably 15% by mass or less as the upper limit.

Also in the resin composition of the present disclosure, the content of the hollow particles is appropriately adjusted depending on the type of the matrix resin, the intended application of the resin composition of the present disclosure, etc., and it is not particularly limited. With respect to 100 parts by mass of the matrix resin, the content of the hollow particles is preferably 5 parts by mass or more, more preferably 10 parts by mass or more, and still more preferably 20 parts by mass or more as the lower limit. On the other hand, the content of the hollow particles is preferably 60 parts by mass or less, and more preferably 55 parts by mass or less as the upper limit.

When the content of the hollow particles is equal to or more than the lower limit value, an excellent weight reduction effect is exerted by the hollow particles. When the content of the hollow particles is equal to or less than the upper limit value, the matrix resin can be sufficiently contained in the resin composition; therefore, a deterioration in the physical properties of the molded body can be suppressed, and the mechanical strength can be improved.

[Method for producing the hollow particles]

The hollow particles are produced by, for example, the production method described below, which is based on the suspension polymerization method.

For example, an embodiment of the method for producing the hollow particles is a hollow particle production method comprising:

preparing a mixture liquid containing a polymerizable compound selected from the group consisting of a radically polymerizable monomer and an epoxy resin, a hydrophobic solvent, a dispersion stabilizer and an aqueous medium,
suspending the mixture liquid to prepare a suspension in which polymerizable droplets containing the polymerizable compound and the hydrophobic solvent are dispersed in the aqueous medium,
subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium, and
removing the hydrophobic solvent from the precursor particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

In the production method, by suspending the mixture liquid containing the polymerizable compound, the hydrophobic solvent, the dispersion stabilizer and the aqueous medium, phase separation occurs between the polymerizable compound and the hydrophobic solvent. Accordingly, the suspension in which the polymerizable droplets are dispersed in the aqueous medium is prepared, the droplets having a distribution structure such that the polymerizable compound is distributed on the surface side and the hydrophobic solvent is distributed in the center. By subjecting the suspension to a polymerization reaction, a cured product starts to precipitate on the surface of the polymerizable droplets, and the polymerization reaction is further developed. Accordingly, the whole surface of the droplets is cured to form the shell, thereby obtaining the hollow particles having the hollow portion filled with the hydrophobic solvent.

The above-described production method includes the steps of preparing the mixture liquid, preparing the suspension, subjecting the suspension to a polymerization reaction, and removing the hydrophobic solvent from the precursor particles. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (for example, the mixture liquid may be suspended while adding the materials for the mixture liquid).

A preferred embodiment of the method for producing the hollow particles used in the present disclosure, may be a production method including the following steps.

(1) Mixture liquid preparation step

The mixture liquid preparation step includes preparing a mixture liquid containing a polymerizable compound, a hydrophobic solvent, a dispersion stabilizer and an aqueous medium.

(2) Suspension step

The suspension step includes suspending the mixture liquid to prepare a suspension in which polymerizable droplets containing the polymerizable compound and the hydrophobic solvent are dispersed in the aqueous medium.

(3) Polymerization step

The polymerization step includes subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium.

(4) Solvent removal step

The solvent removal step includes removing the hydrophobic solvent from the precursor particles.

FIG. 1 is a schematic diagram showing an example of the production method of the present disclosure. The diagrams (1) to (4) in FIG. 1 correspond to the steps (1) to (4) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable compound, the hydrophobic solvent and so on.

The diagram (2) of FIG. 1 is a schematic cross-sectional view showing an embodiment of the suspension in the suspension step. The suspension contains the aqueous medium 1 and polymerizable droplets 3 dispersed in the aqueous medium 1. The polymerizable droplets 3 contain the polymerizable compound, the hydrophobic solvent and so on, and their distribution in the droplets is not uniform. The polymerizable droplets 3 have the following structure: phase separation occurs between a hydrophobic solvent 4a and a material 4b containing the polymerizable compound and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. Precursor particles 5 comprise a shell 6, which contains a resin, and a hollow portion, which is filled with the hydrophobic solvent 4a. The shell 6 forming the outer surface of the precursor particles 5 is formed by polymerization of the polymerizable compound contained in the polymerizable droplets 3. In the diagram (3) of FIG. 1, the precursor particles 5 are dispersed in the aqueous medium 1.

The diagram (4) of FIG. 1 is a schematic cross-sectional view showing an embodiment of the hollow particles obtained in the solvent removal step. In the solvent removal step, hollow particles 10 comprising a resin-containing shell 6 and a gas-filled hollow portion 7 are obtained by removing the hydrophobic solvent from the precursor particles. In the diagram (4) of FIG. 1, the hollow particles 10 are separated from the aqueous medium 1 and present in the gas.

Hereinafter, the four steps described above and other steps will be described in order.

(1) Mixture liquid preparation step

The mixture liquid preparation step includes preparing a mixture liquid containing a polymerizable compound, a hydrophobic solvent, a dispersion stabilizer and an aqueous medium. The mixture liquid may further contain other materials to the extent that does not impair the effects of the present disclosure.

The materials for the mixture liquid will be described in the following order: (A) the polymerizable compound, (B) the hydrophobic solvent, (C) the polymerization initiator, (D) the curing agent, (E) the dispersion stabilizer and (F) the aqueous medium.

(A) Polymerizable compound

As the polymerizable compound, for example, a radically polymerizable monomer or an epoxy resin is preferably used. The radically polymerizable monomer is preferred from the viewpoint of forming a uniform shell and obtaining hollow particles with excellent pressure resistance, and the epoxy resin is preferred from the viewpoint of ease of introduction of the epoxy group to the outer surface of the hollow particles.

(A-1) Radically polymerizable monomer

The radically polymerizable monomer is a compound containing a radically polymerizable group. In the present disclosure, the radically polymerizable monomer may be simply referred to as "polymerizable monomer". From the viewpoint of excellent reactivity, the radically polymerizable group is preferably at least one selected from the group consisting of a (meth)acryloyl group, a vinyl group and an allyl group, and more preferably at least one selected from the group consisting of a (meth)acryloyl group and a vinyl group.

In the present disclosure, a polymerizable monomer which has only one radically polymerizable group per molecule is referred to as a non-crosslinkable monomer, and a polymerizable monomer which has two or more radically polymerizable groups per molecule is referred to as a crosslinkable monomer. The crosslinkable monomer can form crosslinking in the polymer by radical polymerization reaction. The crosslinkable monomer becomes a crosslinkable monomer unit in the shell, and the non-crosslinkable monomer becomes a non-crosslinkable monomer unit in the shell.

Also in the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer". Also in the present disclosure, a polymerizable monomer containing a (meth)acryloyl group as a radically polymerizable group is referred to as "acrylic monomer"; a crosslinkable monomer containing a (meth)acryloyl group as a radically polymerizable group is referred to as "crosslinkable acrylic monomer"; and a non-crosslinkable monomer containing a (meth)acryloyl group as a radically polymerizable group is referred to as "non-crosslinkable acrylic monomer". In the crosslinkable acrylic monomer, at least one radically polymerizable group is only required to be a (meth)acryloyl group, and all radically polymerizable groups are preferably (meth)acryloyl groups.

Also in the present disclosure, (meth)acrylate means each of acrylate and methacrylate; (meth)acryl means each of acryl and methacryl; and (meth)acryloyl means each of acryloyl and methacryloyl.

In the present disclosure, as the radically polymerizable monomer, a combination of an epoxy group-containing monomer and an epoxy group-free monomer is preferably contained.

[Epoxy group-containing monomer]

As the epoxy group-containing monomer, examples include, but are not limited to, an epoxy group-containing (meth)acrylic ester such as glycidyl (meth)acrylate, 4-hydroxybutyl (meth)acrylate glycidyl ether and epoxycyclohexylmethyl (meth)acrylate; an epoxy group-containing styrene such as p-vinylbenzyl glycidyl ether; an epoxy group-containing olefin such as 3,4-epoxy-1-pentene, 3,4-epoxy-1-butene, 4,5-epoxy-2-pentene and 3,4-epoxy-1-vinylcyclohexene; and an epoxy group-containing ether which contains a radically polymerizable group, such as allyl glycidyl ether, vinyl glycidyl ether, 4-vinylcyclohexyl glycidyl ether, cyclohexenyl methyl glycidyl ether and allylphenyl glycidyl ether. These epoxy group-containing monomers may be used alone or in combination of two or more.

Of them, from the viewpoint of reactivity, the epoxy group-containing monomer is preferably the epoxy group-containing (meth)acrylic ester, and particularly preferably glycidyl (meth)acrylate.

[Epoxy group-free monomer]

The epoxy group-free monomer may be a crosslinkable monomer which does not contain an epoxy group, or it may be a non-crosslinkable monomer which is free of an epoxy group. As the epoxy group-free monomer, at least the crosslinkable monomer is preferably contained. By containing the crosslinkable monomer, the hollow portion is easily formed in the interior of the particles; moreover, in the polymerization reaction of the suspension, the crosslinking density of the cured product (polymer) precipitated on the surface of the droplets increases, and the precipitates are crosslinked. Accordingly, the crosslinking density of the shell can be increased. As a result, due to the crosslinkable monomer contained as the epoxy group-free monomer, the shell excellent in strength is easily formed; the thus-obtained hollow particles tend to be spherical; and the hollow portion that is clearly distinguished from the shell is easily formed in the interior of the particles.

As the crosslinkable monomer, examples include, but are not limited to, the following: a crosslinkable hydrocarbon monomer such as an aromatic divinyl monomer (e.g., divinylbenzene, divinylbiphenyl and divinylnaphthalene), a diene monomer (e.g., a linear or branched diolefin such as butadiene, isoprene, 2,3-dimethylbutadiene, pentadiene and hexadiene, and an alicyclic diolefin such as dicyclopentadiene, cyclopentadiene and ethylidene tetracyclododecene) and a crosslinkable macromer (e.g., a polybutadiene, a polyisoprene, a styrene-butadiene block copolymer (SBS) and a styrene-isoprene block copolymer (SIS)); a crosslinkable acrylic monomer such as allyl (meth)acrylate, vinyl (meth) acrylate, ethylene glycol di(meth)acrylate, diethylene glycol di(meth)acrylate, pentaerythritol di(meth)acrylate, tricyclodecane dimethanol di(meth)acrylate, 3-(meth)acryloyloxy-2-hydroxypropyl (meth)acrylate, 1,3-bis(methacryloyloxy)-2-hydroxypropane, trimethylolpropane tri(meth)acrylate, ditrimethylolpropane tetra(meth)acrylate, pentaerythritol tri(meth) acrylate, pentaerythritol tetra(meth)acrylate, dipentaerythritol hexa(meth)acrylate, dipentaerythritol poly(meth)acrylate, 1,6-hexanediol di(meth)acrylate, 1,9-nonanediol di(meth)acrylate, 1,10-decanediol di(meth)acrylate, neopentyl glycol di(meth)acrylate, polyethylene glycol di(meth)acrylate, polypropylene glycol di(meth)acrylate and bisphenol A di(meth) acrylate, and ethoxylates thereof; and a crosslinkable macromer such as both-vinyl-terminated polyphenylene ether and both-(meth)acrylic-terminated polyphenylene ether. These crosslinkable monomers may be used alone or in combination of two or more.

From the viewpoint of increasing the strength of the hollow particles, a crosslinkable hydrocarbon monomer or a crosslinkable acrylic monomer is preferred as the crosslinkable monomer. As the crosslinkable hydrocarbon monomer, an aromatic divinyl monomer is preferred, and a divinylbenzene is particularly preferred.

From the viewpoint of increasing the strength of the hollow particles, at least a difunctional crosslinkable monomer is preferably contained as the crosslinkable monomer. Also, a combination of a difunctional crosslinkable monomer and a trifunctional or higher-functional crosslinkable monomer is preferably contained as the crosslinkable monomer. When the combination of a difunctional crosslinkable monomer and a trifunctional or higher-functional crosslinkable monomer is contained, the content of the difunctional crosslinkable monomer in 100% by mass of the crosslinkable monomer, is not particularly limited. From the viewpoint of increasing the strength of the hollow particles, the content of the difunctional crosslinkable monomer is preferably 60% by mass or more, and more preferably 70% by mass or more as the lower limit, and it is preferably 95% by mass or less, and more preferably 85% by mass or less as the upper limit.

As the non-crosslinkable monomer, examples include, but are not limited to, the following: a non-crosslinkable hydrocarbon monomer such as an aromatic monovinyl monomer (e.g., styrene, vinyl toluene, $\alpha$-methylstyrene, p-methylstyrene, ethylvinylbenzene, ethylvinylbiphenyl and ethylvinylnaphthalene), a linear or branched monoolefin (e.g., ethylene, propylene and butylene) and an alicyclic monoolefin (e.g., vinylcyclohexane, norbornene, tricyclododecene and 1,4-methano-1,4,4a,9a-tetrahydrofluorene); a non-crosslinkable acrylic monomer such as methyl (meth) acrylate, ethyl (meth)acrylate, butyl (meth)acrylate, 2-ethylhexyl (meth)acrylate, lauryl (meth)acrylate), t-butylaminoethyl (meth)acrylate, 2-aminoethyl (meth)acrylate, 2-hydroxyethyl (meth)acrylate, (meth)acrylic acid, (meth)acrylamide, N-methylol (meth)acrylamide, N-butoxymethyl (meth)acrylamide, methoxypolyethylene glycol (meth)acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono (meth) acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a non-crosslinkable macromer such as (meth)acrylic-terminated polystyrene and (meth)acrylic-terminated polymethyl methacrylate.

These non-crosslinkable monomers may be used alone or in combination of two or more.

From the viewpoint of increasing the strength of the hollow particles, the non-crosslinkable monomer is preferably a non-crosslinkable hydrocarbon monomer, more preferably an aromatic monovinyl monomer, and still more preferably styrene and ethylvinylbenzene.

When the radically polymerizable monomer is used as the polymerizable compound, the content of the crosslinkable monomer in 100% by mass of the radically polymerizable monomer is preferably 50% by mass or more, and more preferably 55% by mass or more. When the content of the crosslinkable monomer is equal to or more than the lower limit value, the strength of the shell is increased, and the hollow particles can easily keep a high void ratio. When a combination of the crosslinkable monomer and the non-crosslinkable monomer is contained as the radically polymerizable monomer, the performance of the hollow particles may be improved. When the non-crosslinkable monomer is contained, the content of the crosslinkable monomer in 100% by mass of the radically polymerizable monomer is preferably 95% by mass or less, and more preferably 90% by mass or less.

The content of each monomer in 100% by mass of the radically polymerizable monomer corresponds to the content of each monomer unit in 100% by mass of all the monomer units of the polymer contained in the shell.

Also, in 100% by mass of the radically polymerizable monomer, the content of the epoxy group-containing monomer is preferably 5% by mass or more, and more preferably 10% by mass or more. When the content of the epoxy group-containing monomer is equal to or more than the lower limit value, the epoxy group amount of the hollow particles can easily fall within the above range. From the viewpoint of suppressing a decrease in the strength of the hollow particles, in 100% by mass of the radically polymerizable monomer, the content of the epoxy group-containing monomer is preferably 50% by mass or less, more preferably 40% by mass or less, still more preferably 30% by mass or less, and even more preferably 20% by mass or less.

From the viewpoint of excellent reactivity and from the viewpoint of increasing the strength of the hollow particles, in 100% by mass of the radically polymerizable monomer, the total content of the acrylic monomer and the hydrocarbon monomer is preferably 80% by mass or more, more preferably 90% by mass or more, still more preferably 95% by mass or more, and particularly preferably 100% by mass.

(A-2) Epoxy resin

The epoxy resin is a low- or high-molecular compound which has at least one epoxy group per molecule and which can be cured by forming a crosslinked network by reaction of the epoxy group.

As the epoxy resin, examples include, but are not limited to, a bixylenol type epoxy resin, a bisphenol AD type epoxy resin, a bisphenol A type epoxy resin, a bisphenol F type epoxy resin, a bisphenol S type epoxy resin, a bisphenol AF type epoxy resin, a dicyclopentadiene type epoxy resin, a trisphenol type epoxy resin, a phenol novolac type epoxy resin, a naphthol novolac type epoxy resin, a tert-butyl-catechol type epoxy resin, a naphthalene type epoxy resin, a naphthol type epoxy resin, an anthracene type epoxy resin, a glycidyl amine type epoxy resin, a glycidyl ester type epoxy resin, a cresol novolac type epoxy resin, a bisphenol A novolac type epoxy resin, a phenol aralkyl type epoxy resin, a biphenyl type epoxy resin, a biphenyl aralkyl type epoxy resin, a phenyl aralkyl type epoxy resin, a linear aliphatic epoxy resin, an epoxy resin having a butadiene structure, an alicyclic epoxy resin, a heterocyclic epoxy resin, a spiro ring-containing epoxy resin, a cyclohexane type epoxy resin, a cyclohexanedimethanol type epoxy resin, a naphthylene ether type epoxy resin, a trimethylol type epoxy resin, a tetraphenylethane type epoxy resin, an isocyanurate type epoxy resin, a phenolphthalimidine type epoxy resin, a phenolphthalein type epoxy resin, a rubber-modified epoxy resin (e.g., a silicone-modified epoxy resin), a ε-caprolactone-modified epoxy resin, and a brominated epoxy resin (e.g., a tetrabromo bisphenol A diglycidyl ether). These epoxy resins may be used alone or in combination of two or more.

Since the epoxy group amount of the hollow particles can easily fall within the above range, and since the strength of the shell is increased, the crosslinkable epoxy resin containing two or more epoxy groups per molecule (a polyfunctional epoxy resin) is preferably contained as the epoxy resin.

The crosslinkable epoxy resin is not particularly limited. For example, a biphenyl aralkyl type epoxy resin, a phenyl aralkyl type epoxy resin, a biphenyl type epoxy resin, a naphthalene type epoxy resin, a dicyclopentadiene type epoxy resin, a rubber-modified epoxy resin (e.g., a silicone-modified epoxy resin), a ε-caprolactone-modified epoxy resin, a bisphenol A type epoxy resin, a bisphenol F type epoxy resin, a cresol novolac type epoxy resin, a bisphenol A novolac type epoxy resin, an alicyclic polyfunctional epoxy resin, a glycidyl ester type polyfunctional epoxy resin, a glycidyl amine type polyfunctional epoxy resin, a heterocyclic polyfunctional epoxy resin or the like is preferably used as the crosslinkable epoxy resin. These crosslinkable epoxy resins may be used alone or in combination of two or more.

As the epoxy resin, at least one selected from the group consisting of a bisphenol A type epoxy resin, a dicyclopentadiene type epoxy resin, a naphthalene type epoxy resin and a rubber-modified epoxy resin is preferably used.

Since the epoxy group amount of the hollow particles can easily fall within the above range, the epoxy value of the epoxy resin is preferably 0.1 mmol/g or more, more preferably 0.25 mmol/g or more, still more preferably 0.5 mmol/g or more, even more preferably 1.0 mmol/g or more, and particularly preferably 2.0 mmol/g or more.

In the case of using the epoxy resin as the polymerizable compound, since the strength of the shell is increased, since the hollow particles can easily keep a high void ratio, and since the epoxy group amount of the hollow particles can easily fall within the above range, the content of the crosslinkable epoxy resin in 100% by mass of the epoxy resin is preferably 50% by mass or more, more preferably 70% by mass or more, still more preferably 90% by mass or more, even more preferably 95% by mass or more, and particularly preferably 100% by mass.

The polymerizable compound contained in the mixture liquid is preferably at least one selected from the group consisting of the radically polymerizable monomer and the epoxy resin. Since the epoxy group amount of the hollow particles can be easily increased, the polymerizable compound preferably contains at least the epoxy resin. As the epoxy group amount of the hollow particles increases, the adhesion between the hollow particles and the matrix resin tends to improve; a deterioration in physical properties when formed into a molded body can be easily be suppressed; and the weight reduction effect can be easily improved by suppressing the collapse of the hollow particles is suppressed.

From the viewpoint of suppressing a side reaction in the shell forming step (the polymerization step), the polymerizable compound contained in the mixture liquid is more preferably any one of the radically polymerizable monomer and the epoxy resin.

The content of the polymerizable compound in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable compound is preferably from 15% by mass to 50% by mass, and more preferably from 20% by mass to 40% by mass.

From the viewpoint of suppressing a decrease in the strength of the obtained hollow particles, the total content of the polymerizable compound and the below-described polymerization initiator and curing agent is preferably 96% by mass or more, and more preferably 97% by mass or more, with respect to the total mass (100% by mass) of a solid content obtained by excluding the hydrophobic solvent from the material for the oil phase in the mixture liquid.

In the present disclosure, the solid content includes all components excluding solvent, and a liquid monomer and the like are included in the solid content.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the polymerizable droplets containing the hydrophobic solvent are dispersed in the aqueous medium, is obtained. In the suspension step, phase separation occurs in the polymerizable droplets. As a result, the hydrophobic solvent with low polarity is likely to collect in the interior of the droplets. In the end, according to their respective polarities, the hydrophobic solvent is distributed in the interior of the polymerizable droplets, and the material not containing the hydrophobic solvent is distributed at the periphery of the polymerizable droplets.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from the group consisting of known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferred, and a hydrocarbon solvent containing 5 to 8 carbon atoms is more preferred.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

These hydrophobic solvents may be used alone or in combination of two or more.

From the point of view that phase separation is likely to occur between the polymerizable compound and hydrophobic solvent in the polymerizable droplets during the suspension step, such an organic solvent is preferably selected as the hydrophobic solvent, that the water solubility of the organic solvent is smaller than that of the crosslinkable monomer or crosslinkable epoxy resin contained in the polymerizable compound.

When the polymerizable compound contains the hydrocarbon monomer in an amount of more than 50% by mass, the hydrophobic solvent is preferably a chain hydrocarbon solvent, more preferably a chain hydrocarbon solvent containing 5 to 8 carbon atoms, and still more preferably at least one selected from the group consisting of pentane, hexane, heptane and octane. When the polymerizable compound contains the acrylic monomer in an amount of more than 50% by mass, the hydrophobic solvent is preferably a cyclic hydrocarbon solvent, more preferably a cyclic hydrocarbon solvent containing 5 to 8 carbon atoms, and still more preferably at least one selected from the group consisting of cyclohexane, methylcyclohexane and cycloheptane. When the polymerizable compound contains the epoxy resin in an amount of more than 50% by mass, the hydrophobic solvent is preferably an aromatic hydrocarbon solvent, more preferably an aromatic hydrocarbon solvent containing 5 to 8 carbon atoms, and still more preferably at least one selected from the group consisting of benzene, toluene and xylene.

The boiling point of the hydrophobic solvent is not particularly limited. From the viewpoint of ease of removal in the solvent removal step described later, the boiling point of the hydrophobic solvent is preferably 130°C or less, more preferably 120°C or less, and still more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing more than one kind of hydrophobic solvent and it has more than one boiling point, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity of the hydrophobic solvent at 20°C is preferably 2.5 or less. The relative permittivity is one of the indices of the level of the polarity of a compound. In the case where the hydrophobic solvent has a sufficiently small relative permittivity of 2.5 or less, it is considered that phase separation progresses rapidly in the polymerizable droplets and the hollow portion can be easily formed.

Examples of hydrophobic solvents having a relative permittivity at 20°C of 2.5 or less, are as follows. The inside of the parentheses is the value of relative permittivity.

Pentane (1.8), hexane (1.9), heptane (1.9), octane (1.9), cyclohexane (2.0), toluene (2.4)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

In the present disclosure, the content of the hydrophobic solvent in the mixture liquid is not particularly limited. With respect to 100 parts by mass of the polymerizable compound, the content of the hydrophobic solvent is preferably 100 parts by mass or more and 650 parts by mass or less, more preferably 120 parts by mass or more and 500 parts by mass or less, and still more preferably 140 parts by mass or more and 400 parts by mass or less, from the following viewpoints: the particle diameter of the hollow particles can be easily controlled, and the void ratio can be easily increased while maintaining the strength of the hollow particles. The void ratio of the hollow particles can be controlled by the amount of the hydrophobic solvent in the mixture liquid. In the polymerization step described later, the polymerization reaction progresses while oil droplets containing the polymerizable compound and so on include the hydrophobic solvent. Accordingly, as the content of the hydrophobic solvent increases, the void ratio of the obtained hollow particles tends to increase.

(C) Polymerization initiator

When the mixture liquid contains the radically polymerizable monomer as the polymerizable compound, the mixture liquid preferably contains a polymerization initiator for the radically polymerizable monomer.

The polymerization initiator is preferably an oil-soluble polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). Of them, an organic peroxide is preferably used as the oil-soluble polymerization initiator. In the case of using an organic peroxide as the polymerization initiator, the amount of the radically polymerizable monomer remaining unreacted and the amount of the residual polymerization initiator or a decomposition product thereof are easily decreased.

The content of the polymerization initiator is not particularly limited. With respect to 100 parts by mass of the radically polymerizable monomer, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, the polymerization reaction can progress sufficiently. When the content of the polymerization initiator is equal to or less than the upper limit value, the polymerization initiator is less likely to remain after the end of the polymerization reaction, and an unexpected side reaction is less likely to progress.

(D) Curing agent

When the mixture liquid contains an epoxy resin as the polymerizable compound, the mixture liquid preferably contains an epoxy resin curing agent. As the curing agent, a known curing agent for epoxy resins can be used. In general, a compound containing active hydrogen is used.

As the curing agent, examples include, but are not limited to, an amine-based curing agent, an acid anhydride-based curing agent, a thiol-based curing agent, a phenol-based curing agent, a naphthol-based curing agent, a benzoxazine-based curing agent, a cyanate ester-based curing agent and a carbodiimide-based curing agent. Of them, from the viewpoint of high reactivity with epoxy resin, an amine-based curing agent is particularly preferably used.

These curing agents may be used alone or in combination of two or more.

As the amine-based curing agent, examples include, but are not limited to, a polyamine-based compound such as ethylenediamine, tetramethylenediamine, hexamethylenediamine, phenylenediamine, diethylenetriamine, triethylenetetramine, diethylaminopropylamine, tetraethylenepentamine, norbornanediamine, isophoronediamine, xylylenediamine and polyetheramine; an imidazole-based compound such as 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-methyl-4'-methylimidazolyl-(1')]-ethyl-s-triazine, a 2-phenylimidazole isocyanuric acid adduct and a 2-methylimidazole isocyanuric acid adduct; a piperazine-based compound such as piperazine, 2-methylpiperazine and 2,5-dimethylpiperazine; and an amino group-containing prepolymer such as an amino adduct of epoxy resin. Of them, at least one selected from the group consisting of the polyamine-based compound and the imidazole-based compound is preferred.

The content of the curing agent is appropriately adjusted depending on the type of the curing agent, etc., and it is not particularly limited. With respect to 100 parts by mass of the epoxy resin, the content of the curing agent is preferably from 0.01 parts by mass to 1000 parts by mass, more preferably from 0.02 parts by mass to 900 parts by mass, still more preferably from 0.04 parts by mass to 800 parts by mass, and even more preferably from 1 part by mass to 150 parts by mass. When the content of the curing agent is equal to or more than the lower limit value, the crosslinking reaction of the epoxy group can be sufficiently developed. When the content of the curing agent is equal to or less than the upper limit value, the epoxy group amount of the hollow particles is likely to be within the above range.

(E) Dispersion stabilizer

The dispersion stabilizer is an agent for dispersing the polymerizable droplets in the aqueous medium in the suspension step. As the dispersion stabilizer, examples include, but are not limited to, an inorganic dispersion stabilizer, an organic or inorganic water-soluble polymer stabilizer and a surfactant.

In the present disclosure, an inorganic dispersion stabilizer is preferably used as the dispersion stabilizer, from the following viewpoints: the particle diameter of the droplets can be easily controlled in the suspension, and the dispersion stabilizer can be easily removed by the washing step; moreover, an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more.

As the inorganic dispersion stabilizer, a sparingly water-soluble inorganic dispersion stabilizer is preferably used. The term "sparingly water-soluble" is preferably such that the solubility in water at 25°C is less than 1 g/L.

As the sparingly water-soluble inorganic dispersion stabilizer, a metal hydroxide is preferred, and a magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the inorganic dispersion stabilizer can be easily removed by the washing step described below.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from the group consisting of alkali metal hydroxide salts and alkaline earth metal hydroxide salts in the aqueous medium, is not particularly limited. For example, an aqueous solution of the water-soluble polyvalent metal salt may be mixed with an aqueous solution of the at least one selected from the group consisting of alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (such as polyacrylic acid), a cellulose (such as hydroxyethyl cellulose, carboxymethyl cellulose, methyl cellulose and ethyl cellulose), polyvinylpyrrolidone, polyacrylimide, polyethylene oxide and a poly(hydroxystearic acid-g-methyl methacrylate-co-methacrylic acid) copolymer.

As the inorganic water-soluble polymer stabilizer, examples include, but are not limited to, sodium tripolyphosphate.

The surfactant is a compound containing both a hydrophilic group and a hydrophobic group per molecule. As the surfactant, examples include, but are not limited to, a conventionally-known ionic surfactant such as an anionic surfactant, a cationic surfactant and an amphoteric surfactant, and a conventionally-known non-ionic surfactant.

For the water-soluble polymer stabilizer and the surfactant, the solubility in water at 25°C is 1 g/L or more.

The content of the dispersion stabilizer is not particularly limited. With respect to the total mass (100 parts by mass) of the polymerizable compound and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the polymerizable droplets can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

In the hollow particles of the present disclosure, the amount of the residual dispersion stabilizer is preferably as small as possible, and the hollow particles are most preferably free of the dispersion stabilizer, from the viewpoint of suppressing a decrease in the reactivity between the hollow particles and the matrix resin to improve the adhesion between the hollow particles and the matrix resin and suppress a deterioration in physical properties when formed into a molded body, and from the viewpoint of suppressing the collapse of the hollow particles to improve the weight reduction effect. Especially, the amount of the residual water-soluble polymer stabilizer and that of the residual surfactant are preferably as small as possible, and the hollow particles containing neither the water-soluble polymer stabilizer nor the surfactant are particularly preferred. By using only the inorganic dispersion stabilizer as the dispersion stabilizer, the hollow particles in which both the water-soluble polymer stabilizer and the surfactant are below the detection limit, can be obtained.

(F) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the polymerizable droplets, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol, tetrahydrofuran (THF), and dimethyl sulfoxide (DMSO).

The content of the aqueous medium is not particularly limited. From the viewpoint of controlling the particle diameter and void ratio of the hollow particles in the preferred ranges described below, with respect to the total amount (100 parts by mass) of the polymerizable compound, polymerization initiator and curing agent contained in the mixture liquid, the content of the aqueous medium is preferably 200 parts by mass or more, more preferably 400 parts by mass or more, and still more preferably 600 parts by mass or more, as the lower limit. The content is preferably 1000 parts by mass or less, and more preferably 800 parts by mass or less, as the upper limit.

The mixture liquid may further contain other materials that are different from the above-mentioned materials (A) to (F), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable compound, (B) the hydrophobic solvent, (C) the polymerization initiator and (D) the curing agent is dispersed with a size of a particle diameter of approximately several millimeters in an aqueous phase containing (E) the dispersion stabilizer, (F) the aqueous medium and so on. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable compound, the hydrophobic solvent and so on, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles in which the composition of the shell portion is uniform, can be produced. Also, the particle diameter of the hollow particles can be easily controlled.

(2) Suspension step

The suspension step includes suspending the mixture liquid to prepare the suspension in which the polymerizable droplets containing the hydrophobic solvent are dispersed in the aqueous medium.

The suspension method for forming the polymerizable droplets is not particularly limited, and a known suspension method can be employed. A disperser is used to prepare the suspension. As the disperser, for example, a horizontal or vertical in-line disperser such as MILDER (manufactured by Pacific Machinery & Engineering Co., Ltd.), CAVITRON (manufactured by EUROTEC, Ltd.) and an in-line disperser manufactured by IKA (e.g., DISPAX-REACTOR (registered trademark) DRS) or an emulsifying disperser such as HOMOMIXER MARK II series (manufactured by PRIMIX Corporation) can be used.

In the dispersion for the preparation of the suspension, from the viewpoint of controlling the particle diameter of the hollow particles within the above-described preferred range, the tip speed of the rotor of the disperser is preferably 5 m/s or more, more preferably 10 m/s or more, and still more preferably 15 m/s or more. On the other hand, from the viewpoint of decreasing the amount of the irregular-shaped particles, it is preferably 90 m/s or less, more preferably 89 m/s or less, and still more preferably 88 m/s or less.

In the suspension prepared in the suspension step, the polymerizable droplets containing the lipophilic materials mentioned above and having a particle diameter of approximately from 1 $\mu$m to 20 $\mu$m, are dispersed uniformly in the aqueous medium. Such polymerizable droplets are difficult to observe with the naked eye and can be observed with a known observation instrument such as an optical microscope.

In the suspension step, since phase separation occurs in the polymerizable droplets, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The polymerizable droplets dispersed in the aqueous medium are formed of the oil phase containing the lipophilic materials such as the polymerizable compound and the hydrophobic solvent and the dispersion stabilizer surrounding the periphery of the oil phase.

When the radically polymerizable monomer and the oil-soluble polymerization initiator are contained as the polymerizable compound and the polymerization initiator, respectively, the oil-soluble polymerization initiator generates polymerization initiating radicals in the interior of the polymerizable droplets which are minute oil droplets. Therefore, the precursor particles having a target particle diameter can be produced without an excessive growth of the minute oil droplets. In the suspension polymerization method using such an oil-soluble polymerization initiator, there is no opportunity for the polymerization initiator to come into contact with the radically polymerizable monomer dispersed in the aqueous medium. Therefore, by using the oil-soluble polymerization initiator, the subgeneration of surplus resin particles (e.g., solid particles having a relatively small particle diameter) in addition to the target resin particles having the hollow portion, can be suppressed.

(3) Polymerization step

The polymerization step includes subjecting the suspension to a polymerization reaction to prepare the precursor composition in which the precursor particles comprising the shell, which contains the resin, and the hollow portion, which is surrounded by the shell and filled with the hydrophobic solvent, are dispersed in the aqueous medium.

In this step, the shell portion of the polymerizable droplets, which contain the hydrophobic solvent in the interior thereof, is polymerized, and the hollow portion filled with the hydrophobic solvent is formed in the interior of the precursor particles thus obtained.

In the polymerization step, the polymerization system is not particularly limited. For example, a known polymerization system such as a batch system, a semicontinuous system and a continuous system may be employed.

The polymerization temperature is not particularly limited. From the viewpoint of sufficiently promoting the polymerization reaction, the polymerization temperature is preferably 60°C or more, more preferably 70°C or more, and still more preferably 80°C or more. From the viewpoint of suppressing the evaporation of the aqueous medium, the polymerization temperature is preferably 95°C or less.

The polymerization reaction time is not particularly limited. From the viewpoint of sufficiently promoting the polymerization reaction, the polymerization reaction time is preferably 5 hours or more, and more preferably 10 hours or more. From the viewpoint of production efficiency, the polymerization reaction time is preferably 60 hours or less, more preferably 48 hours or less, and particularly preferably 36 hours or less.

During the polymerization reaction, the suspension is generally stirred. The stirring power of the stirring is not particularly limited. From the viewpoint of promoting the polymerization reaction, the stirring power is preferably 0.01 $kW/m^3$ or more, more preferably 0.02 $kW/m^3$ or more, and still more preferably 0.03 $kW/m^3$ or more. From the viewpoint of decreasing the amount of the irregular-shaped particles, it is preferably 0.20 $kW/m^3$ or less, more preferably 0.10 $kW/m^3$ or less, and still more preferably 0.05 $kW/m^3$ or less.

(4) Solvent removal step

The solvent removal step includes removing the hydrophobic solvent from the precursor particles.

As the method for removing the hydrophobic solvent from the precursor particles, examples include, but are not limited to, the following methods (i) to (iii).

(i) A method including steps of introducing a gas into the precursor composition in the form of slurry to remove the hydrophobic solvent from the precursor particles in the slurry, subjecting the precursor composition to solid-liquid separation, and then removing the remaining aqueous medium from the precursor particles in the gaseous atmosphere, thereby obtaining the hollow particles in which the hollow portion is filled with gas.

(ii) A method including steps of subjecting the precursor composition in the form of slurry to solid-liquid separation and then removing the hydrophobic solvent from the precursor particles in the gaseous atmosphere, thereby obtaining the hollow particles in which the hollow portion is filled with gas.

(iii) A method including evaporative distillation of the hydrophobic solvent from the precursor particles included in the precursor composition in the form of slurry at a predetermined pressure (a high, normal or reduced pressure).

Of them, from the viewpoint of excellent efficiency of the hydrophobic solvent, the methods (i) and (ii) are preferred. From the viewpoint of ease of removal of impurities as well as the hydrophobic solvent, the method (i) is more preferred.

In the method (i), the hydrophobic solvent is preferably removed from the precursor particles by bubbling gas into the precursor composition while stirring the precursor composition in the form of slurry in a stirring tank. Accordingly, the hollow particles in which the hollow portion is filled with the bubbled gas, are obtained.

The gas can be bubbled into the precursor composition by, for example, directly introducing the gas into the precursor composition, that is, by directly injecting the gas into the precursor composition. Alternatively, the gas in the vapor phase can be bubbled into the precursor composition by stirring the precursor composition in the stirring tank containing a vapor phase and a liquid phase which contains the precursor composition. Especially from the viewpoint of efficient removal of the hydrophobic solvent included in the precursor particles and efficient removal of the impurities such as the unreacted polymerizable monomer remaining in the precursor particles, the gas is preferably bubbled into the precursor composition by, while directly introducing the gas into the precursor composition, stirring the precursor composition in the stirring tank containing the vapor phase. The vapor phase in the stirring tank is preferably filled with the gas in advance, which is bubbled into the precursor composition.

The gas bubbled into the precursor composition is preferably at least one selected from the group consisting of inert gas and air, and it is more preferably inert gas. As the inert gas, examples include, but are not limited to, nitrogen, argon and helium. Of them, nitrogen is preferred.

From the viewpoint of efficient removal of the hydrophobic solvent included in the precursor particles, the time required to bubble the gas into the precursor composition is preferably two hours or more, more preferably 5 hours or more, still more preferably 10 hours or more, and even more preferably 15 hours or more. On the other hand, from the viewpoint of production efficiency, it is preferably 72 hours or less, and more preferably 60 hours or less.

When the polymerization reaction time of the above-described polymerization step is 50 hours or more, the hydrophobic solvent included in the precursor particles can be sufficiently removed even when the bubbling time of the solvent removal step is less than two hours. When the polymerization reaction time of the above-described polymerization step is 50 hours or more, the bubbling time of the solvent removal step is preferably 20 minutes or more, and more preferably 30 minutes or more.

The stirring power for stirring the precursor composition is not particularly limited. From the viewpoint of efficient removal of the hydrophobic solvent included in the precursor particles, the stirring power is preferably 0.01 kW/m$^3$ or more, more preferably 0.02 kW/m$^3$ or more, and still more preferably 0.03 kW/m$^3$ or more. On the other hand, from the viewpoint of decreasing the amount of the irregular-shaped particles and suppressing the foaming of the precursor composition, the stirring power is preferably 0.60 kW/m$^3$ or less, more preferably 0.55 kW/m$^3$ or less, still more preferably 0.50 kW/m$^3$ or less, even more preferably 0.20 kW/m$^3$ or less, and particularly preferably 0.10 kW/m$^3$ or less, and it may be 0.05 kW/m$^3$ or less.

From the viewpoint of efficient removal of the hydrophobic solvent included in the precursor particles, the gas is preferably bubbled into the precursor composition under a pressure of 20 kPa or more and 300 kPa or less, and more preferably under a pressure of 40 kPa or more and 200 kPa or less. The pressure is preferably equal to or more than the lower limit value, since the yield of the hollow particles is increased. Also, the pressure is preferably equal to or less than the upper limit value, since the amount of the irregular-shaped particles can be decreased. Especially from the viewpoint of excellent hydrophobic solvent removal efficiency, the gas is preferably bubbled into the precursor composition under a pressure of atmospheric pressure or less, and more preferably under a reduced pressure of 60 kPa or less. On the other hand, from the viewpoint of suppressing the foaming of the precursor composition, the gas is preferably bubbled into the precursor composition under a pressure of 150 kPa or more. The yield of the hollow particles is increased by suppressing the foaming of the precursor composition during the bubbling. The pressure may be the internal pressure of the stirring tank.

The flow rate of the gas introduced into the stirring tank is not particularly limited. From the viewpoint of efficient removal of the hydrophobic solvent included in the precursor particles, the flow rate per unit time is preferably 4 L/min or more, more preferably 8 L/min or more, and still more preferably 10 L/min or more. The flow rate per unit volume is preferably 200 L/(min·m$^3$) or more, more preferably 8,000 L/(min·m$^3$) or more, and still more preferably 10,000 L/(min·m$^3$) or more. From the viewpoint of cost reduction, the upper limit of the gas flow rate per unit time may be 10,000 L/min or less, and the upper limit of the gas flow rate per unit volume may be 500,000 L/(min·m$^3$) or less.

In the case of using a stirring tank with a capacity of 3 L to 15000 L, the gas flow rate is preferably within the above range.

The stirring tank preferably contains the vapor phase and the liquid phase which contains the precursor composition. This is because, when the stirring tank contains the vapor phase, the hydrophobic solvent included in the precursor particles can pass into the vapor phase, and it can be removed with high efficiency, accordingly.

With respect to the capacity of the stirring tank, the percentage of the liquid phase contained therein is preferably 30% by volume or more and less than 80% by volume, from the viewpoint of efficient removal of the hydrophobic solvent included in the precursor particles.

The method for directly introducing the gas into the precursor composition, is preferably direct introduction of the gas into the precursor composition in the stirring tank from the side or bottom of the stirring tank, and more preferably direct introduction of the gas from the bottom of the stirring tank, for example. The bottom of the stirring tank is a part that can be observed when viewing the stirring tank in use from the bottom. The stirring tank is typically in a columnar form. The bottom face which is located on the lower side of the direction of the force of gravity, is the bottom of the columnar stirring tank, and it is the deepest part thereof.

In the case of directly introducing the gas into the precursor composition, the gas introduction portion is preferably as close as possible to the deepest part of the stirring tank, since the gas can be easily and uniformly bubbled into the precursor composition. Once the gas is uniformly bubbled into the precursor composition, the hydrophobic solvent removed from the precursor particles can easily pass into the upper vapor phase, and the removal efficiency is improved, accordingly.

Also, the gas is preferably introduced into the precursor composition toward the center of the region occupied by the precursor composition in the stirring tank, since the gas can be easily and uniformly bubbled in to the precursor composition. That is, in the case of introducing the gas from the bottom of the stirring tank, the gas is preferably introduced toward the direction opposite to the direction of the force of gravity.

The direction of the force of gravity in the present disclosure does not always need to be aligned with the direction of the force of gravity. For example, an axis misalignment of 30 degrees or less is allowed.

Meanwhile, the yield of the hollow particles may be increased by bubbling the gas in the vapor phase into the precursor composition just by introducing the gas into the vapor phase in the stirring tank and stirring the precursor composition in the stirring tank, instead of direct introduction of the gas into the precursor composition.

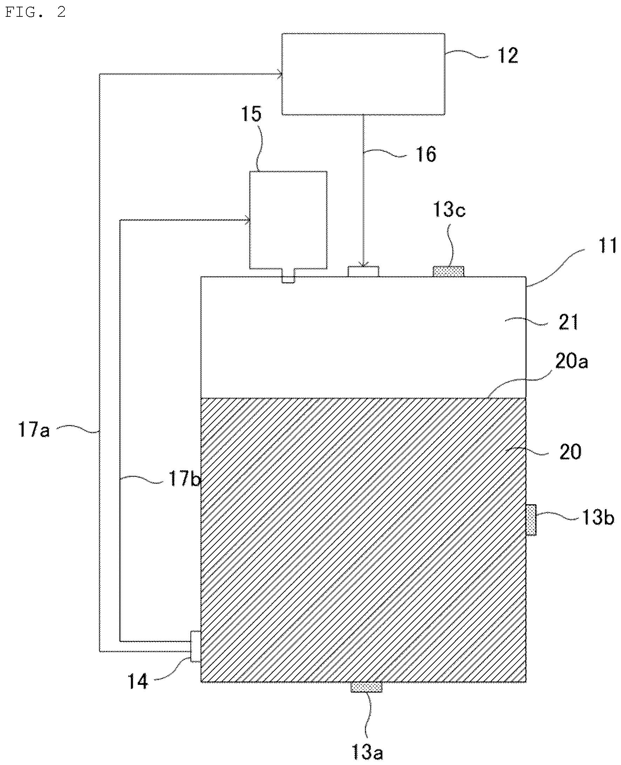

This step can be carried out by the stirring apparatus as shown in FIG. 2, for example. FIG. 2 is merely a schematic diagram for description, and the stirring apparatus used in the solvent removal step of the present disclosure is not limited to the method shown in FIG. 2. Further, the structure, dimension, shape and so on of the stirring apparatus used in the solvent removal step of the present disclosure are not limited to the structure, dimension, shape and so on shown in FIG. 2.

In the stirring apparatus shown in FIG. 2, once the precursor composition (a slurry solution) is supplied to a supply tank 12, the precursor composition is supplied from the supply tank 12 to the interior of a stirring tank 11 through a supply line 16. The method for supplying the precursor composition is not particularly limited, and the precursor composition may be supplied by use of a liquid feed pump, for example. The precursor composition is supplied to the interior of the stirring tank 11 through an inner nozzle (not shown). A precursor composition 20 (the precursor composition) in the stirring tank 11 is stirred by rotating a rotor (not shown) disposed in the interior of the stirring tank 11.

The stirring tank 11 includes gas inlets 13a, 13b and 13c. The gas can be introduced into the stirring tank 11 through the gas inlet 13a, 13b or 13c. The gas inlet 13a is disposed on the bottom of the stirring tank 11. The gas inlet 13b is disposed on the side of the stirring tank 11. When the gas is introduced from the gas inlet 13a or 13b, the gas can be directly injected and bubbled into the precursor composition 20 in the stirring tank 11. The gas inlet 13c is disposed on the top of the stirring tank 11. When the gas is introduced from the gas inlet 13c, the gas is injected into a vapor phase 21 in the interior of the stirring tank 11. By stirring the precursor composition 20 in the stirring tank 11, the gas in the vapor phase 21 is bubbled into the precursor composition 20.

In the stirring apparatus shown in FIG. 2, the precursor composition 20 can be circulated in the stirring apparatus by returning the precursor composition 20 stirred in the stirring tank 11 from an outlet 14 to the interior of the stirring tank 11 through a circulation line 17a, the supply tank 12 and the supply line 16.

The stirring apparatus shown in FIG. 2 further includes a spray mechanism 15. In the stirring apparatus shown in FIG. 2, a part of the precursor composition 20 stirred in the stirring tank 11 can be supplied from the outlet 14 to the spray mechanism 15 through a circulation line 17b and then sprayed to a liquid surface 20a of the precursor composition 20 in the stirring tank 11.

The internal pressure of the stirring tank 11 can be controlled by controlling the flow rate of the precursor composition discharged from the stirring tank 11.

During the bubbling of the gas into the precursor composition, a cycle of supplying the precursor composition from the supply tank to the stirring tank, stirring the precursor composition in the stirring tank and then discharging the precursor composition to the supply tank, is preferably repeated to circulate the precursor composition in the stirring apparatus. Accordingly, the hydrophobic solvent included in the precursor particles can be efficiently removed. The flow rate of the circulation is not particularly limited.

When bubbling the gas into the precursor composition, a part of the precursor composition is preferably supplied from the stirring tank to the spray mechanism and sprayed to the liquid surface of the precursor composition in the stirring tank. Accordingly, the hydrophobic solvent included in the precursor particles can be efficiently removed, and the bubbling time can be shortened, therefore.

The precursor composition can be continuously or intermittently sprayed during the bubbling of the gas into the precursor composition. The precursor composition is preferably sprayed continuously. In the case of intermittently spraying the precursor composition, the precursor composition is preferably appropriately sprayed until, upon the foaming of the precursor composition and a rise in the liquid surface, the foam disappears. In the case of spraying the precursor composition, the amount of the sprayed precursor composition is not particularly limited.

The temperature at the time of bubbling the gas into the precursor composition is preferably a temperature equal to or more than the temperature obtained by subtracting 35°C from the boiling point of the hydrophobic solvent, more preferably a temperature equal to or more than the temperature obtained by subtracting 30°C from the boiling point of the hydrophobic solvent, and still more preferably a temperature equal to or more than the temperature obtained by subtracting 20°C from the boiling point of the hydrophobic solvent, from the viewpoint of decreasing the amount of the residual hydrophobic solvent. When the hydrophobic solvent is a mixed solvent containing more than one type of hydrophobic solvents and it has more than one boiling point, the boiling point of the hydrophobic solvent in the solvent removal step is determined as the boiling point of the solvent having the highest boiling point among the solvents contained in the mixed solvent, that is, the highest boiling point of the more than one boiling point.

The temperature at the time of bubbling the gas into the precursor composition is generally set to a temperature equal to or more than the polymerization temperature of the polymerization step.

The temperature at the time of bubbling the gas into the precursor composition is not particularly limited, and it may be from 50°C to 100°C.

In the method (ii), after the solid-liquid separation of the precursor composition in the form of slurry, the precursor particles are dried in the gaseous atmosphere to remove the included hydrophobic solvent from the precursor particles. Accordingly, the hydrophobic solvent in the interior of the precursor particles is replaced with gas, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

Also, the hollow particles may be preliminarily dried. The hollow particles may be preliminarily dried by use of a drying apparatus such as a dryer and a drying appliance such as a hand dryer.

The hydrophobic solvent in the interior of the precursor particles is replaced with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. As the drying atmosphere, examples may include air, oxygen, nitrogen and argon. Further, by filling the interior of the hollow particles with gas once and then performing reduced pressure drying, hollow particles in which the interior is evacuated are also temporarily obtained.

(5) Washing step

The above-described production method preferably further includes the washing step for removal of the dispersion stabilizer.

For example, the washing step is preferably carried out by repeating a series of the following steps two or more times: adding acid or alkali to the aqueous dispersion of the hollow particles after the solvent removal step or to the precursor composition in the form of slurry to dissolve the dispersion stabilizer contained in the hollow particles or precursor particles into the aqueous medium, separating the hollow particles or precursor particles from the aqueous medium, dispersing the separated hollow particles or precursor particles in deionized water to be reslurried, and then separating the hollow particles or precursor particles.

The washing step is preferably carried out on the hollow particles after being subjected to the removal of the hydrophobic solvent from the precursor particles because, compared to the case of carrying out the washing step on the precursor particles before being subjected to the removal of the hydrophobic solvent, the hollow particles are less likely to aggregate during the washing and can be thoroughly washed, resulting in an improvement in washability.

From the point of view that the residual dispersion stabilizer is further removed from the hollow particles or precursor particles, a series of the following operations is preferably repeated three times or more in the washing step: adding acid or alkali, separating the hollow particles or precursor particles, dispersing the hollow particles or precursor particles in deionized water to be reslurried, and then separating the hollow particles or precursor particles. The number of times to carry out the series of the operations is preferably 4 times or more, and more preferably 5 times or more. The upper limit of the number of times to carry out the series of the operations is not particularly limited. From the viewpoint of ease of production, it may be 10 times or less, or it may be 8 times or less.

When the dispersion stabilizer used is an acid-soluble inorganic dispersion stabilizer, acid is preferably added. When the dispersion stabilizer used is an alkali-soluble inorganic dispersion stabilizer, alkali is preferably added.

When the dispersion stabilizer used is the acid-soluble inorganic dispersion stabilizer, the pH of the precursor composition is preferably adjusted to 6.5 or less, and more preferably 6 or less, by adding acid to the aqueous dispersion of the hollow particles after the solvent removal step or to the precursor composition in the form of slurry. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small burden on production equipment.

The method for separating the hollow particles or precursor particles from the aqueous medium, that is, the solid-liquid separation method is not particularly limited. As the method, examples include, but are not limited to, a centrifugation method, a filtration method, and still-standing separation. Among them, a filtration method is preferred from the viewpoint of simplicity of the operation and high dispersion stabilizer removal efficiency. Upon the solid-liquid separation, the hollow particles or precursor particles obtained by the filtration method or the like are preferably dehydrated by a known method.

As the filtration method, for example, any method such as natural filtration (normal pressure filtration), reduced pressure filtration, pressure filtration and centrifugal filtration can be used. Of them, pressure filtration is preferred from the viewpoint of efficient removal of the residual dispersion stabilizer from the hollow particles or precursor particles.

In the production method of the present disclosure, an operation to separate the hollow particles or precursor particles from the aqueous medium is performed more than one time in the washing step. Pressure filtration is preferably carried out in at least one of the performed operations, and it is more preferably carried out in all of the performed operations.

(6) Drying step

The production method may further include a drying step for removal of residual water from the hollow particles. The method for drying the washed hollow particles for removal of the residual water is not particularly limited. The same method as the method for drying the precursor particles in a gaseous atmosphere, which is described above as the method (ii) in the solvent removal step, may be employed. In the drying step, a dehydrated cake of the hollow particles is generally dried.

The water content of the hollow particles before drying is generally from 40% to 80%. In the present disclosure, the water content can be calculated by the following formula (IV).

$$\text{Water content (\%)} = \{(w1 - w2) / w1\} \times 100 \quad \text{Formula (IV)}$$

In the formula (IV), w1 represents the mass of a measurement sample, and w2 represents the mass of the measurement sample after the sample is dried at 200°C for 12 hours and then cooled down to 25°C.

(7) Other steps

In addition to the steps (1) to (6) mentioned above, a particle interior substitution step may be added, for example. The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

[Matrix resin]

In the resin composition of the present disclosure, the matrix resin comprises a matrix resin containing a functional group which is reactive with an epoxy group. The reaction between the epoxy group and the functional group of the matrix resin is only required to be a covalent bond-forming reaction.

From the viewpoint of reactivity, the functional group which is reactive with an epoxy group is preferably at least one selected from the group consisting of a hydroxy group, an amino group, an epoxy group, a carboxy group, a carboxylic anhydride group, a thiol group, an isocyanate group and a silanol group. Of them, the functional group of the matrix resin is particularly preferably an epoxy group, an amino group, a hydroxy group, a carboxy group and a carboxylic anhydride group, since a reaction for high strength crosslinking is developed between the functional group of the matrix and the epoxy group on the hollow particle surface.

As the matrix resin containing the functional group which is reactive with an epoxy group, for example, at least one selected from the group consisting of the following is preferably used: an epoxy resin, a benzoxazine resin, a cyanate resin, a polyimide resin, a silicone resin, a polyester resin, a liquid crystal polymer (LCP), a modified polyolefin resin, a polyphenylene ether resin, a thiol resin, a polyurethane resin, a polyurea resin and raw material compounds thereof. Preferably, the matrix resin containing the functional group which is reactive with an epoxy group is appropriately selected and used depending on the intended application of the resin composition of the present disclosure. Of them, at least one selected from the group consisting of an epoxy resin, a benzoxazine resin, a polyimide resin, a polyester resin, a liquid crystal polymer (LCP), a modified polyolefin resin, a polyphenylene ether resin and raw material compounds thereof, is particularly preferably contained as the matrix resin.

As the epoxy resin, examples include, but are not limited to, those exemplified above as the epoxy resin that is applicable to the hollow particles.

From the viewpoint of obtaining a cured product with high crosslinking density, the epoxy resin used as the matrix resin preferably has an epoxy equivalent of 1000 or less, and more preferably 500 or less. The lower limit of the epoxy equivalent of the epoxy resin is not particularly limited, and it may be 100 or more, for example.

The benzoxazine resin and the polyphenylene ether resin are preferably used as a matrix resin containing a hydroxy group.

The benzoxazine resin is not particularly limited, and a known compound containing two or more dihydrobenzoxazine rings per molecule is preferably used as the benzoxazine resin. As the benzoxazine resin, examples include, but are not limited to, P-d type benzoxazine and F-a type benzoxazine.

The polyphenylene ether resin is not particularly limited, and a known resin containing a polyphenylene ether skeleton may be used. As the polyphenylene ether resin, examples include, but are not limited to, poly(2,6-dimethyl-1,4-phenylene)ether, an alloyed polymer of poly(2,6-dimethyl-1,4-phenylene) ether and polystyrene, and an alloyed polymer of poly (2, 6-dimethyl-1, 4-phenylene)ether and a styrene-butadiene copolymer.

The polyimide resin is obtained by imidization reaction of polyamic acid. The polyamic acid contains an amide bond and a carboxy group. The polyamic acid is obtained by reaction of a diamine component with a tetracarboxylic acid component such as a tetracarboxylic dianhydride, a tetracarboxylic acid, and a tetracarboxylic acid derivative (e.g., tetracarboxylic acid diester).

The tetracarboxylic acid component and the diamine component, both of which are raw material compounds of the polyimide resin, are preferably used as a matrix resin containing a carboxy group or carboxylic anhydride group and a matrix resin containing an amino group, respectively.

As the tetracarboxylic acid component, examples include, but are not limited to, benzophenonetetracarboxylic dianhydride, 4,4'-oxydiphthalic anhydride, pyromellitic acid, dianhydrides thereof, 3,3',4,4'-biphenyltetracarboxylic acid and dianhydrides thereof.

As the diamine component, examples include, but are not limited to, p-phenylenediamine and 4,4'-diaminodiphenylether.

As the polyester resin and the liquid crystal polymer (LCP), a polymer having, at the terminal(s) of the polymer, at least one functional group selected from the group consisting of a hydroxy group, a carboxy group and an amino group, the functional group being derived from the raw material of the polymer, is preferably used. Also, the polyester resin and the liquid crystal polymer (LCP) generally have an alkoxycarbonyl group. The functional group present at the polymer terminal of the polyester resin and the liquid crystal polymer (LCP) reacts with the epoxy group present on the surface of the hollow particles; some of the epoxy groups on the surface of the hollow particles are turned into hydroxy groups by the reaction; and the hydroxy group reacts with the alkoxycarbonyl group of the polyester resin and the liquid crystal polymer (LCP), thereby forming a more rigid crosslinked structure.

The polyester resin is not particularly limited, and a saturated or unsaturated polyester resin can be used.

As the modified polyolefin resin, a resin in which a functional group which is reactive with an epoxy group is introduced therein by modification, is preferably used. The modified polyolefin resin can be selected from known resins containing a polyolefin skeleton and used.

As the modified polyolefin resin, for example, a carboxylic acid-modified polyolefin resin containing a carboxy group or a carboxylic anhydride group introduced therein, is preferably used.

The carboxylic acid-modified polyolefin resin can be obtained by, for example, grafting at least one selected from the group consisting of $\alpha,\beta$-unsaturated carboxylic acids and acid anhydrides thereof to a polyolefin resin. As the $\alpha,\beta$-unsaturated carboxylic acids and the acid anhydrides thereof, examples include, but are not limited to, (meth)acrylic acid, maleic acid, fumaric acid, itaconic acid, citraconic acid and acid anhydrides thereof. Of them, maleic anhydride and maleic acid are preferred, and maleic anhydride is more preferred.

As the carboxylic acid-modified polyolefin resin, for example, a commercially-available product such as UMEX series manufactured by Sanyo Chemical Industries, Ltd., may be used.

The acid value of the carboxylic acid-modified polyolefin resin is preferably 3 mgKOH/g or more, more preferably 10 mgKOH/g or more, and still more preferably 15 mgKOH/g or more. On the other hand, the acid value is preferably 150 mgKOH/g or less, more preferably 120 mgKOH/g or less, and still more preferably 100 mgKOH/g or less as the upper limit.

Also, an epoxy-modified polyolefin resin having an epoxy group introduced therein, is preferably used as the modified polyolefin resin.

The epoxy-modified polyolefin resin can be obtained by copolymerizing polymerizable monomers containing an olefin and an epoxy group-containing monomer. As the epoxy group-containing monomer, examples include, but are not limited to, glycidyl (meth)acrylate, allyl glycidyl ether and epoxybutene.

As the epoxy-modified polyolefin resin, for example, a commercially-available product such as MODIPER (registered trademark) A4100, A4300 and A4400 manufactured by NOF Corporation may be used.

The cyanate resin is used preferably used as a matrix resin containing an isocyanate group. As the cyanate resin, examples include, but are not limited to, a novolac type cyanate resin, a bisphenol A type cyanate resin, a bisphenol E type cyanate resin, a bisphenol F type cyanate resin, a tetramethyl bisphenol F type cyanate resin and a dicyclopentadiene type cyanate resin.

The polyurethane resin is obtained by reaction of a polyol component containing a hydroxy group and a polyisocyanate component containing an isocyanate group.

The polyol component and the polyisocyanate component, which are raw material compounds of the polyurethane resin, are preferably used as a matrix resin containing a hydroxy group and a matrix resin containing an isocyanate group, respectively.

As the polyol component, examples include, but are not limited to, ethylene glycol, propylene glycol, glycerol, trimethylolpropane, pentaerythritol, sorbitol, sucrose, polyoxypropylene triol and polyester polyol.

As the polyisocyanate component, examples include, but are not limited to, an aliphatic polyisocyanate and an aromatic polyisocyanate.

As the aliphatic polyisocyanate, examples include, but are not limited to, a polyisocyanate containing a chain structure, such as tetramethylene diisocyanate, hexamethylene diisocyanate, dodecamethylene diisocyanate, 2,2,4-trimethylhexamethylene diisocyanate, 2,4,4-trimethylhexamethylene diisocyanate, lysine diisocyanate, 2-methylpentane-1,5-diisocyanate and 3-methylpentane-1,5-diisocyanate, and a polyisocyanate containing a cyclic structure, such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanatemethyl)cyclohexane.

As the aromatic polyisocyanate, examples include, but are not limited to, tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyldiphenylmethane diisocyanate, tetraalkyldiphenylmethane diisocyanate and $\alpha,\alpha,\alpha,\alpha$-tetramethylxylylene diisocyanate.

The polyurea resin is obtained by reaction of a polyisocyanate component containing an isocyanate group and a polyamine component containing an amino group.

The polyisocyanate component and the polyamine component, both of which are raw material compounds of the polyurea resin, are preferably used as a matrix resin containing an isocyanate group and a matrix resin containing an amino group, respectively.

As the polyisocyanate component, examples include, but are not limited to, those exemplified above as the polyisocyanate component used in the polyurethane resin.

As the polyamine component, examples include, but are not limited to, a difunctional polyamine such as ethylenediamine, propylenediamine, pentanediamine, isophoronediamine, xylylenediamine, diphenylmethanediamine, hydrogenated diphenylmethanediamine, hydrazine and poly(propylene glycol) diamine, and a trifunctional or higher-functional polyamine such as diethylenetriamine, triethylenetetramine, tetraethylenepentamine and polyamidepolyamine.

The silicone resin is preferably used as a matrix resin containing a silanol group. As the silicone resin, any type of curable silicone resin may be used, such as an addition type silicone resin, a condensed type silicone resin, a UV curing type silicone resin, an electron beam curing type silicone resin and a solvent-free type silicone resin. As the curable silicone resin, examples include, but are not limited to, the following commercially-available products: KS-774, KS-775, KS-778, KS-779H, KS-847, KS-847T, KS-856, X-62-2422 and X-62-2461 (product names, all manufactured by Shin-Etsu Chemical Co., Ltd.); DKQ3-202, DKQ3-203, DKQ3-204, DKQ3-205 and DKQ3-210 (product names, all manufactured by Dow Corning Asia Ltd.); YSR-3022, TPR-6700, TPR-6720 and TPR-6721 (product names, all manufactured by Toshiba Silicone Co., Ltd.); and SD7220, SD7226 and SD7229 (product names, all manufactured by Dow Corning Toray Co., Ltd.)

The thiol resin is preferably used as a matrix resin containing a thiol group.

As the thiol resin, examples include, but are not limited to, a thiol compound such as trimethylolpropane tris(3-mercaptopropionate), 3-mercaptopropionate ester of pentaerythritol, dipentaerythritol hexakis(3-mercaptopropionate), tris-[(3-mercaptopropionyloxy)-ethyl]-isocyanurate, polyethylene glycol=bis(3-mercaptopropionate) and pentaerythritol tetrapropanethiol.

Also, a polyphenylene sulfide resin is preferably used as the thiol resin, since it has a thiol group derived from a raw material at a polymer terminal thereof. The polyphenylene sulfide resin is not particularly limited, and a known resin containing a polyphenylene sulfide skeleton may be used. The polyphenylene sulfide resin encompasses polymers that are homologous to polyphenylene sulfide, such as polyphenylene sulfide ketone (PPSK), polyphenylene sulfide sulfone (PPSS) and polybiphenylene sulfide (PBPS).

As the matrix resin, the resin composition of the present disclosure may further contain a matrix resin which is free of the above functional group. As the matrix resin free of the functional group, for example, a bis-maleimide resin, a hydrocarbon resin or the like is preferably used.

In the resin composition of the present disclosure, the content of the matrix resin is not particularly limited. In 100% by mass of the total solid content of the resin composition, the content of the matrix resin is preferably 30% by mass or more, more preferably 40% by mass or more, and still more preferably 50% by mass or more as the lower limit. On the other hand, it is preferably 95% by mass or less, and more preferably 90% by mass or less as the upper limit. When the content of the matrix resin is equal to or more than the lower limit value, a deteriorate in the physical properties of the resin composition can be suppressed; the formability of the resin composition can be improved; and the mechanical strength of the resin composition can be improved. On the other hand, when the content of the matrix resin is equal to or less than the upper limit value, the hollow particles can be sufficiently contained; therefore, excellent effects are exerted by the hollow particles, such as the effect of decreasing the weight of the resin composition and the effect of heat insulation.

From the viewpoint of improving the adhesion between the matrix resin and the hollow particles and suppressing a deterioration in physical properties when formed into a molded body, and from the viewpoint of suppressing the collapse of the hollow particles and improving the weight reduction effect, in 100% by mass of the matrix resin contained in the resin composition of the present disclosure, the content of the matrix resin containing the functional group reactive with an epoxy group is preferably 10% by mass or more, more preferably 50% by mass or more, still more preferably 70% by mass or more, and even more preferably 90% by mass or more.

The matrix resins described above may be used alone or in combination of two or more.

[Curing agent]

The resin composition of the present disclosure may further contain a curing agent for curing the matrix resin.

The curing agent may be appropriately selected from known curing agents, depending on the type of the matrix resin, and it is not particularly limited. As the curing agent for curing the epoxy resin, examples include, but are not limited to, those exemplified above as the curing agent that is applicable to the hollow particles.

The curing agent preferably contains a functional group which is reactive with an epoxy group, since a deterioration in the physical properties of the resin composition of the present disclosure is further suppressed.

The content of the curing agent is not particularly limited. For example, with respect to 100 parts by mass of the matrix resin, the content of the curing agent may be from 1 part by mass to 120 parts by mass.

[Catalyst]

The resin composition of the present disclosure may further contain a catalyst for curing the matrix resin.

The catalyst used for imidization reaction of polyamic acid may be a combination of an organic acid anhydride and an organic base, for example. As the organic acid anhydride, examples include, but are not limited to, acetic anhydride, propionic anhydride, maleic anhydride and phthalic anhydride. As the organic base, examples include a heterocyclic compound such as pyridine and picoline, and a tertiary amine such as triethylamine and N,N-dimethylaniline.

The catalyst preferably contains a functional group which is reactive with an epoxy group, since a deterioration in the physical properties of the resin composition of the present disclosure is further suppressed.

The content of the catalyst is appropriately adjusted depending on the type of the matrix resin, and it is not particularly limited.

[Others]

The resin composition of the present disclosure may further contain a solvent. A known solvent can be used as the solvent, and it is appropriately selected depending on the type of the matrix resin.

As needed, the resin composition of the present disclosure may further contain additives such as a curing accelerator, a filler, a coupling agent, a stress reducing agent, a defoaming agent, a leveling agent, a UV absorber, a foaming agent, an antioxidant, a colorant, a thermal stabilizer and a flame retardant, to the extent that does not impair the effects of the present disclosure. As the filler, examples include, but are not limited to, inorganic or organic fine particles and inorganic or organic fibers.

The total content of the hollow particles, matrix resin and curing agent in the total solid content (100% by mass) of the resin composition of the present disclosure, is not particularly limited. The total content is preferably 80% by mass or more, more preferably 90% by mass or more, and still more preferably 95% by mass or more, since the molded body is likely to obtain excellent physical properties.

[Method for producing the resin composition]

The resin composition of the present disclosure can be obtained by mixing the above-described hollow particles, the matrix resin, and other components which are added as needed. The method for mixing them is not particularly limited. For example, they can be mixed by use of a known mixing device such as a planetary mixer, a ball mill, a bead mill, a planetary mixer and a roll mill. The resin composition of the present disclosure obtained by use of such a mixing device is generally a resin composition in a liquid form (a resin varnish).

When the matrix resin is a thermoplastic resin, the resin composition of the present disclosure may be a resin composition which is obtained by melt-kneading the above-described hollow particles, matrix resin and other components added as needed and pelletizing the obtained mixture. They are preferably melt-kneaded in a condition such that the hollow particles do not collapse while melting the matrix resin. The condition is preferably a melt-kneading temperature in a range of from 30°C to 300°C. In the pelletized resin composition of the present disclosure obtained in this manner, at least some of the hollow particles are thought to be crosslinked to the matrix resin.

[Applications of the resin composition]

The applications of the resin composition of the present disclosure are not particularly limited. For example, the resin composition of the present disclosure is preferably used in various kinds of components that are required to have mechanical properties and lightness in weight, in various kinds of fields such as automobiles, bicycles, aviation, space, rail vehicles, ships, architecture, electronics, electric, sporting goods, footwear, household appliances, stationery supplies and the tools. Also, the resin composition of the present disclosure is preferably used in filaments of 3D printers and floating buoyant materials such as syntactic foam.

2. Prepreg

The prepreg of the present disclosure may be, for example, a prepreg obtained by impregnating a substrate with the resin composition in the liquid form (resin varnish) and heat-drying the resin composition of the substrate. The prepreg of the present disclosure obtained in this manner generally contains a semi-cured product of the resin composition of the present disclosure described above. At least some of the hollow particles in the semi-cured product are considered to be crosslinked to the matrix resin.

Also, the prepreg of the present disclosure may be a thermoplastic prepreg obtained by impregnating a substrate with the pelletized resin composition of the present disclosure. The thermoplastic prepreg can be obtained by, for example, melting the resin composition of the present disclosure, impregnating a substrate with the melted resin composition, and then solidifying the resin composition of the substrate by cooling. In the solidified resin composition contained in the thermoplastic prepreg of the present disclosure obtained in this manner, at least some of the hollow particles are thought to be crosslinked to the matrix resin.

Since the prepreg of the present disclosure contains the hollow particles of the present disclosure, it is a prepreg which is excellent in lightness in weight and in which a deterioration in physical properties is suppressed.

The substrate used to produce the prepreg is not particularly limited. As the substrate, examples include, but are not limited to, a substrate comprising inorganic fibers such as carbon fibers, glass fibers, metal fibers and ceramic fibers, or organic synthetic fibers such as polyamide fibers, polyester-based fibers, polyolefin-based fibers and novoloid fibers. The form of the substrate is not limited and may be a woven fabric, a non-woven fabric or the like. From the viewpoint of mechanical strength and so on, a glass cloth (glass fibers) is preferred.

As for the thickness of the substrate, for example, a substrate having a thickness of from 0.04 mm to 0.3 mm may be generally used.

The method for impregnating the substrate with the resin composition is not particularly limited. As the method, examples include, but are not limited to, a method of immersing the substrate in the resin composition and a method of applying the resin composition to the substrate. As needed, the impregnation may be repeated more than one time.

The heat-drying method is not particularly limited, and it is only required to be a method by which the liquid matrix resin is put in a semi-cured state (the B-stage state). For example, it can be carried out by use of an oven or the like. The heating temperature is not particularly limited. For example, the heating temperature may be from 20°C to 200°C; it may be from 50°C to 200°C; it may be from 100°C to 180°C; or it may be from 150°C to 170°C. The heating time is not particularly limited. For example, the heating time may be from one minute to one hour, or it may be from 5 minutes to 40 minutes. The heat-drying may be carried out by gradually changing the temperature. Before the heat-drying, natural drying may be carried out as preliminary drying.

In the case of producing the thermoplastic prepreg, the temperature for melting the resin composition of the present disclosure is adjusted so that, while melting the resin composition of the present disclosure, the hollow particles in the resin composition do not collapse. The temperature for melting the resin composition is not particularly limited, and it is preferably within a range of from 30°C to 300°C.

3. Molded body

The molded body of the present disclosure contains the cured product of the resin composition. In the cured product, at least some of the hollow particles are thought to be crosslinked to the matrix resin. The cured product of the resin composition of the present disclosure may be a thermosetting resin cured by heating, or it may be a thermoplastic resin cured by cooling, for example.

When curing the resin composition, generally, when curing the thermosetting resin, the curing is preferably performed in an inert atmosphere, from the viewpoint of suppressing a change in the performance of the molded body.

The molded body of the present disclosure is formed from the resin composition of the present disclosure in a condition such that at least some of the epoxy groups of the hollow particles contained in the resin composition of the present disclosure reacts with the functional group of the matrix resin. For example, the molded body of the present disclosure is obtained by heat-drying the liquid resin composition of the present disclosure and hot-pressing the heat-dried resin composition. Also, the molded body of the present disclosure may be a molded body obtained by molding the pelletized resin composition of the present disclosure by a known method. A molded body obtained by hot pressing the above-described prepreg of the present disclosure is the molded body of the present disclosure.

Since the molded body of the present disclosure contains the hollow particles of the present disclosure, it is a molded body which is excellent in lightness in weight and in which a deterioration in physical properties is suppressed.

In the molded body of the present disclosure, the content of the hollow particles is not particularly limited. On a mass basis, the content of the hollow particles is preferably 5% by mass or more, more preferably 10% by mass or more, and still more preferably 20% by mass or more as the lower limit. On the other hand, it is preferably 50% by mass or less, more preferably 40% by mass or less, and still more preferably 30% by mass or less as the upper limit.

In the molded body of the present disclosure, the volume-based content of the hollow particles is preferably 20% by volume or more, more preferably 30% by volume or more, and still more preferably 40% by volume or more as the lower limit. On the other hand, it is preferably 90% by volume or less, more preferably 80% by volume or less, and still more preferably 70% by volume or less as the upper limit.

When the content of the hollow particles is equal to or more than the lower limit value, the lightness in weight of the molded body can be improved. When the content of the hollow particles is equal to or less than the upper limit value, a deterioration in the physical properties of the molded body can be suppressed.

In the molded body of the present disclosure, the content of the matrix resin is not particularly limited. From the viewpoint of suppressing a deterioration in the physical properties of the molded body and increasing the mechanical strength thereof, the content of the matrix resin is preferably 20% by volume or more, and more preferably 30% by volume or more. From the viewpoint of sufficiently containing the hollow particles, it is preferably 90% by volume or less, and more preferably 80% by volume or less.

When the matrix resin contained in the resin composition of the present disclosure is cured by an additive such as a curing agent, the matrix resin contained in the molded body of the present disclosure may contain an additive such as the curing agent.

The molded body of the present disclosure may contain reinforcing fibers. That is, the molded body of the present disclosure may be a fiber-reinforced molded body.

As the reinforcing fibers, examples include, but are not limited to, organic or inorganic fibers such as carbon fibers, glass fibers, aramid fibers, polyethylene fibers, cellulose nanofibers, alumina fibers, boron fibers, tyranno fibers, SiC fibers and liquid crystal polymer (LCP) fibers. The reinforcing fibers are particularly preferably carbon fibers, from the viewpoint of excellent mechanical properties, thermal oxidation resistance, dimensional stability and so on.

The form of the reinforcing fibers is not particularly limited. For example, reinforcing fibers processed into a woven fabric, a non-woven fabric, a mat or the like may be used. Also, the reinforcing fibers may be long or short fibers.

The reinforcing fibers may be used as the substrate of a prepreg, or they may be contained as a filler.

When the molded body of the present disclosure contains the reinforcing fibers, the content of the reinforcing fibers is not particularly limited. The content of the reinforcing fibers is preferably 10% by volume or more, more preferably 20% by volume or more, and still more preferably 30% by volume or more as the lower limit. On the other hand, the content is preferably 60% by volume or less, and more preferably 50% by volume or less as the upper limit.

When the content of the reinforcing fibers is equal to or more than the lower limit value, the strength of the molded body can be further increased. On the other hand, when the content of the reinforcing fibers is equal to or less than the upper limit value, the matrix resin and the hollow particles can be sufficiently contained.

The mass-based content of the hollow particles in the fiber-reinforced molded body can be obtained as follows. First, from the mass of the fiber-reinforced molded body and the mass of the reinforcing fibers in the fiber-reinforced molded body, the content (% by mass) of the resin component in the fiber-reinforced molded body is calculated by the following formula (1). Next, from the content (% by mass) of the resin component and from the content (% by mass) of the hollow particles in the solid content of the resin composition applied to the reinforcing fibers, the mass-based content (% by mass) of the hollow particles can be calculated by the following formula (2).

The "resin component" means, among the materials constituting the fiber-reinforced molded body, the total of the materials other than the reinforcing fibers. Typically, it is the total of the matrix resin and hollow particles in the fiber-reinforced molded body.

The fiber-reinforced molded body used to obtain the mass-based content of the hollow particles, is only required to be a fiber-reinforced molded body from which the solvent is removed. Using an intermediate product such as a prepreg, the content of the hollow particles contained in the finished product obtained by curing the prepreg, can be obtained.

```
Content (% by mass) of the resin component

= {(Mass of the fiber-reinforced molded body - Mass of

the reinforcing fibers) / Mass of the fiber-reinforced molded

body} × 100   Formula (1)
```

```
Content (% by mass) of the hollow particles

= Content (% by mass) of the resin component × Content (%
by mass) of the hollow particles in the solid content of the
resin composition applied to the reinforcing fibers / 100
Formula (2)
```

The volume-based content of the hollow particles in the fiber-reinforced molded body can be calculated as follows, for example. First, the volumes of the hollow particles, matrix resin and reinforcing fibers constituting the fiber-reinforced molded body, are obtained by the following formulae (3), (4) and (5). Next, using the obtained values, the volume-based content of the hollow particles can be calculated by the following formula (6).

```
Volume of the hollow particles

= Content (% by mass) of the hollow particles / Specific
gravity (g/cm³) of the hollow particles   Formula (3)

Volume of the matrix resin

= Content (% by mass) of the matrix resin / Specific
gravity (g/cm³) of the cured matrix resin   Formula (4)

Volume of the reinforcing fibers

= Content (% by mass) of the reinforcing fibers / Specific
gravity (g/cm³) of the reinforcing fibers   Formula (5)

Content (% by volume) of the hollow particles

= {Volume of the hollow particles / (Volume of the hollow
particles + Volume of the matrix resin + Volume of the
reinforcing fibers)} × 100   Formula (6)
```

The "content (% by mass) of the hollow particles" used in the formula (3) is the value obtained by the formula (2).
The "content (% by mass) of the matrix resin" used in the formula (4) can be calculated by the following formula (7).

```
Content (% by mass) of the matrix resin

= Content (% by mass) of the resin component × Content (%
by mass) of the matrix resin in the solid content of the resin
composition applied to the reinforcing fibers / 100   Formula
(7)
```

In the formula (7), the "content (% by mass) of the resin component" is the value obtained by the formula (1).
The "specific gravity (g/cm³) of the cured matrix resin" used in the formula (4) can be the value of the true density of the cured product of a composition obtained by removing the hollow particles from the resin composition to be applied to the reinforcing fibers. The true density of the composition is obtained by the same method as for the hollow particles.
The "content (% by mass) of the reinforcing fibers" used in the formula (5) can be calculated by the following

formula (8).

$$\text{Content (\% by mass) of the reinforcing fibers} = (\text{Mass of the reinforcing fibers} / \text{Mass of the fiber-reinforced molded body}) \times 100 \quad \text{Formula (8)}$$

The tensile elastic modulus of the molded body of the present disclosure is not particularly limited. The tensile elastic modulus is preferably 13 GPa or more, and more preferably 14 GPa or more as the lower limit. On the other hand, the tensile elastic modulus is preferably 30 GPa or less, and more preferably 25 GPa or less as the upper limit. The tensile elastic modulus of the molded body of the present disclosure may be different depending on the type of the matrix resin. For example, when the epoxy resin is used as the matrix resin, the tensile elastic modulus of the molded body of the present disclosure is preferably 16 GPa or more, more preferably 17 GPa or more, and still more preferably 18 GPa or more as the lower limit, and it is preferably 25 GPa or less, and more preferably 23 GPa or less as the upper limit. When an unsaturated polyester resin is used as the matrix resin, the tensile elastic modulus of the molded body of the present disclosure is preferably 7 GPa or more, and more preferably 7.2 GPa or more as the lower limit, and it is preferably 20 GPa or less, and more preferably 10 GPa or less as the upper limit. When the modified polyolefin resin is used as the matrix resin, the tensile elastic modulus of the molded body of the present disclosure is preferably 5.5 GPa or more, and more preferably 5.7 GPa or more as the lower limit, and it is preferably 20 GPa or less, and more preferably 10 GPa or less as the upper limit.

The tensile strength of the molded body of the present disclosure is not particularly limited. The tensile strength is preferably 350 MPa or more, and more preferably 400 MPa or more as the lower limit. On the other hand, the tensile strength is preferably 650 MPa or less, and more preferably 600 MPa as the upper limit. Also, the tensile strength of the molded body of the present disclosure may be different depending on the type of the matrix resin. For example, when the epoxy resin is used as the matrix resin, the tensile strength of the molded body of the present disclosure is preferably 440 MPa or more, and more preferably 450 MPa or more as the lower limit, and it is preferably 650 MPa or less, and more preferably 600 MPa or less as the upper limit. When an unsaturated polyester resin is used as the matrix resin, the tensile strength of the molded body of the present disclosure is preferably 80 MPa or more, and more preferably 85 MPa or more as the lower limit, and it is preferably 200 MPa or less, and more preferably 150 MPa or less as the upper limit. When the modified polyolefin resin is used as the matrix resin, the tensile strength of the molded body of the present disclosure is preferably 70 MPa or more, and more preferably 73 MPa or more as the lower limit, and it is preferably 150 MPa or less, and more preferably 100 MPa or less as the upper limit.

In the present disclosure, the tensile elastic modulus and tensile strength of the molded body are measured in accordance with JIS K 7165:2008.

The form of the molded body of the present disclosure is not particularly limited, and it may be any kind of formable form. For example, the molded body may be in a sheet form, a film form or a plate form, or it may be in any form such as a tube form and various kinds of other three-dimensional forms.

The method for producing the molded body of the present disclosure is not particularly limited. As the production method, examples include, but are not limited to, a method including the step of curing the above-described resin composition of the present disclosure.

When the resin composition of the present disclosure is the resin varnish, the method for curing the resin composition of the present disclosure may be, for example, the method for heat-drying the resin composition of the present disclosure and hot-pressing the heat-dried resin composition.

The heat-drying method is not particularly limited, and it may be the same as the heat-drying method employed in the production of the prepreg using the resin varnish.

The hot-pressing method is not particularly limited. For example, the resin composition can be hot-pressed by use of a hot press machine. The hot-pressing temperature, pressure and time are not particularly limited, and they can be appropriately set depending on the type and content of the matrix resin, the form of the molded body, etc. For example, the temperature may be set to a range of from 100°C to 250°C or from 120°C to 220°C, and the pressure may be set to a range of from 0.5 MPa to 5.0 MPa. The hot-pressing time is not particularly limited. For example, it may be from 1 minute to 5 hours, or it may be from 1 hour to 3 hours. Also, the resin composition can be hot-pressed in stages by gradually changing the hot-pressing temperature or pressure.

When the resin composition of the present disclosure is in the form of pellets, the step of curing the resin composition of the present disclosure may be, for example, a step of melting the pelletized resin composition and solidifying the melted resin composition by cooling.

As the applications of the molded body of the present disclosure, examples include, but are not limited to, those exemplified above as the applications of the resin composition of the present disclosure.

Examples

Hereinbelow, the present disclosure is described more specifically using the following examples and comparative examples. However, the present disclosure is not limited to these examples. Also, "part(s)" and "%" are on a mass basis unless otherwise specified.

[Example 1]

1. Production of hollow particles

(1) Mixture liquid preparation step

First, the following materials were mixed to produce an oil phase.

Divinylbenzene (DVB) 32.4 parts
Ethylvinylbenzene (EVB) 1.3 parts
Glycidyl methacrylate 5.0 parts
t-Butylperoxy diethylacetate 0.89 parts
Hydrophobic solvent (heptane) 61.3 parts

Next, in a stirring tank, an aqueous solution in which 13.72 parts of sodium hydroxide (an alkali metal hydroxide) was dissolved in 55 parts of deionized water, was gradually added under stirring to an aqueous solution in which 19.59 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide 10 parts). The dispersion was used as an aqueous phase.
The obtained aqueous phase and oil phase were mixed, thereby preparing a mixture liquid.

(2) Suspension step

The mixture liquid obtained in the mixture liquid preparation step was suspended with an emulsifying disperser (product name: HOMOMIXER, manufactured by PRIMIX Corporation) for one minute in the condition that the tip speed of the rotor was 88 m/s, thereby preparing a suspension in which polymerizable droplets including the hydrophobic solvent were dispersed in water.

(3) Polymerization step

In a nitrogen atmosphere, the temperature of the suspension obtained in the suspension step was increased to 80°C. The stirring power of the stirring blades was set to 0.04 kW/m$^3$, and the suspension was stirred for 24 hours, thereby performing a polymerization reaction. Accordingly, a precursor composition was obtained, which was a slurry solution in which precursor particles containing the hydrophobic solvent were dispersed in water.

(4) Solvent removal step

The solvent removal step was carried out by the following procedure, using the stirring apparatus as shown in FIG. 2. As the stirring tank, a stirring tank with a capacity of 3.6 L was used. The interior of the stirring tank when supplying the precursor composition was a nitrogen atmosphere.
First, 2.6 L of the precursor composition obtained in the polymerization step was supplied from the supply tank to the stirring tank. The stirring power of the stirring blades disposed in the interior of the stirring tank was set to 0.04 kW/m$^3$, and the temperature of the precursor composition was increased to 95°C, while stirring the precursor composition in the stirring tank. The pressure in the interior of the stirring tank was reduced to 40 kPa. Nitrogen was bubbled into the precursor composition for 15 hours by stirring the precursor composition in the stirring tank, while nitrogen was directly injected into the precursor composition at a flow rate of 10 L/min (the flow rate per unit volume was 10,000 L/(min·m$^3$) since the vapor phase was 1 L) from the gas inlet on the bottom of the stirring tank (the gas inlet 13a in FIG. 2) toward the direction opposite to the direction of the force of gravity. During the bubbling, the cycle of stirring the fed precursor composition in the stirring tank, discharging the precursor composition to the supply tank, and then supplying again the precursor composition from the supply tank to the stirring tank, was repeated to circulate the precursor composition in the stirring apparatus. Also, during the bubbling, a part of the fed precursor composition was supplied from the stirring tank to the spray mechanism and continuously sprayed to the liquid surface of the precursor composition in the stirring tank. Accordingly, the aqueous dispersion of the hollow particles in which the hollow portion was filled with nitrogen, was obtained.

(5) Washing step

The aqueous dispersion of the hollow particles obtained in the solvent removal step was mixed with dilute sulfuric acid in an environment at 25°C and stirred for 10 minutes, thereby obtaining a pH-controlled slurry in which the pH was controlled to 5.5 or less. Keeping the temperature at 25°C, the pH-controlled slurry was subjected to pressure filtration and dehydrated, thereby obtaining a dehydrated cake of the hollow particles. A series of the following operations was repeated 6 times: washing the obtained dehydrated cake with 400 parts of deionized water, subjecting the washed cake to pressure filtration, and dehydrating the cake.

(6) Drying step

After the washing step, the dehydrated cake (water content 67%, thickness 2 cm) was preliminary dried using a dryer at a temperature of 40°C. Then, the cake was heated for 12 hours using a vacuum dryer under a vacuum condition at 200°C and 4 kPa, thereby removing the residual water from the particles. Accordingly, hollow particles 1 were obtained.

2. Preparation of resin composition (varnish)

The following materials were put in a stirring tank: 50 parts of epoxy resin (manufactured by: Daicel Corporation, product name: EHPE3150CE, a mixture of a 1,2-epoxy-4-(2-oxiranyl)cyclohexane adduct of 2,2-bis(hydroxymethyl)-1-butanol and 3,4-epoxycyclohexenyl methyl-3',4'-epoxycyclohexene carboxylate, epoxy equivalent: 180); as curing agents, 24.9 parts of a bisphenol A novolac resin (manufactured by: DIC Corporation, product name: PHENOLITE LF-6161, an MEK solution (solid content 65%)) and 0.1 parts of 2-ethyl-4-methylimidazole (manufactured by: Nacalai Tesque, Inc., product name: 2E4MZ); and 30 parts of methyl ethyl ketone (MEK). The mixture was stirred for 30 minutes at room temperature. After stirring the mixture, 25 parts of the hollow particles 1 obtained above were added to the mixture, and the mixture was further stirred for one hour, thereby producing a resin composition (varnish) having a solid content of about 70%.

3. Production of prepreg

A carbon fiber sheet (manufactured by: Mitsubishi Chemical Corporation, product name: TR3110MS, thickness: 200 μm, weight per unit area: 200 g/m$^2$) cut to a size of 300 mm × 200 mm was prepared. Next, 25 ml to 30 ml of the resin composition obtained above was applied to the cut sheet.

The carbon fiber sheet to which the resin composition was applied, was hung to cause the excess resin composition to fall under its own weight. Then, the sheet was naturally dried in air. Then, it was dried in a hot air circulation oven at 140°C for 30 minutes, thereby obtaining a prepreg.

4. Production of carbon fiber-reinforced molded body (CFRP)

A SUS plate, a PET film (manufactured by: Nippa Corporation, product name: SFL, thickness: 50 μm), a stack of two prepregs obtained above, another PET film (manufactured by Nippa Corporation, product name: SFL, thickness: 50 μm) and another SUS plate were stacked in this order. This stack was fed into a vacuum press machine, and it was heated and pressurized for 20 minutes at 120°C and 0.5 MPa. Then, the heating temperature was further increased to 205°C (4°C/min) and kept at that temperature for one hour. Then, the stack was removed from the vacuum press machine, thereby obtaining a plate-shaped carbon fiber-reinforced molded body (CFRP).

[Example 2]

The hollow particles 2 of Example 2 were obtained in the same manner as Example 1, except that in "(1) Mixture liquid preparation step" of "1. Production of hollow particles", the amount of the radically polymerizable monomer added to the oil phase was changed according to Table 1.

The resin composition, prepreg and carbon fiber-reinforced molded body (CFRP) of Example 2 were obtained in the same manner as Example 1, except that instead of the hollow particles 1, the hollow particles 2 were used in "2. Preparation of resin composition (varnish)", "3. Production of prepreg" and "4. Production of carbon fiber-reinforced molded body (CFRP)".

[Example 3]

The hollow particles 3 of Example 3 were obtained in the same manner as Example 1, except for the following: in " (1) Mixture liquid preparation step" of "1. Production of hollow particles", the type and amount of the radically polymerizable monomer added to the oil phase and the type of the hydrophobic solvent added thereto were changed according to Table 1; moreover, in the preparation of the aqueous phase, an aqueous solution in which 5.49 parts of sodium hydroxide (an alkali metal hydroxide) was dissolved in 55 parts of deionized water, was gradually added to an aqueous solution in which 7.83 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide 4 parts) for use as the aqueous phase.

In Tables 1 and 2, "EGDMA" means ethylene glycol dimethacrylate, and "A-TMMT" means pentaerythritol tetraacrylate.

The resin composition, prepreg and carbon fiber-reinforced molded body (CFRP) of Example 3 were obtained in the same manner as Example 1, except that instead of the hollow particles 1, the hollow particles 3 were used in "2. Preparation of resin composition (varnish)", "3. Production of prepreg" and "4. Production of carbon fiber-reinforced molded body (CFRP)".

[Example 4]

The hollow particles 4 of Example 4 were obtained in the same manner as Example 1, except that the mixture liquid preparation step ("(1) Mixture liquid preparation step") of "1. Production of hollow particles" was changed as follows.

In the mixture liquid preparation step of Example 4, first, the following materials were mixed to produce an oil phase.

Epoxy resin (a bisphenol A type epoxy resin, the number of epoxy groups per molecule: 2, epoxy value: 5.26 mmol/g, product name: jER (registered trademark) 828, manufactured by: Mitsubishi Chemical Corporation) 35.7 parts

Curing agent (2-ethyl-4-methylimidazole) 1.49 parts

Hydrophobic solvent (toluene) 62.8 parts

Next, in a stirring tank, an aqueous solution in which 5.49 parts of sodium hydroxide (an alkali metal hydroxide) was dissolved in 55 parts of deionized water, was gradually added under stirring to an aqueous solution in which 7.83 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide 4 parts). The dispersion was used as an aqueous phase.

The obtained aqueous phase and oil phase were mixed, thereby preparing a mixture liquid.

The resin composition, prepreg and carbon fiber-reinforced molded body (CFRP) of Example 4 were obtained in the same manner as Example 1, except that instead of the hollow particles 1, the hollow particles 4 were used in "2. Preparation of resin composition (varnish)", "3. Production of prepreg" and "4. Production of carbon fiber-reinforced molded body (CFRP)".

[Examples 5 to 9]

The hollow particles 5 to 9 of Examples 5 to 9 were obtained in the same manner as Example 4, except that the type and amount of the added epoxy resin and those of the added curing agent were changed according to Table 1.

The resin composition, prepreg and carbon fiber-reinforced molded body (CFRP) of Examples 5 to 9 were obtained in the same manner as Example 1, except that instead of the hollow particles 1, the hollow particles 5 to 9 were used in "2. Preparation of resin composition (varnish)", "3. Production of prepreg" and "4. Production of carbon fiber-reinforced molded body (CFRP)".

The details of the epoxy resins and curing agents shown in Tables 1 and 2 are as follows.

• "jER828"

Bisphenol A type epoxy resin, the number of epoxy groups per molecule: 2, epoxy value: 5.26 mmol/g, product name: jER (registered trademark) 828, manufactured by: Mitsubishi Chemical Corporation

• "HP7200"

Dicyclopentadiene type epoxy resin, the number of epoxy groups per molecule: 2, product name: EPICLON (registered trademark) HP-7200, manufactured by: DIC Corporation

• "HP4700"

Naphthalene type epoxy resin, the number of epoxy groups per molecule: 2, epoxy value: 3.77 mmol/g, product name: EPICLON (registered trademark) HP-4700, manufactured by: DIC Corporation

• "TSR960"

Flexibility imparting type (solvent-free type, rubber-modified) epoxy resin, the number of epoxy groups per molecule: 2, epoxy value: 4.17 mmol/g, product name: EPICLON (registered trademark) TSR-960, manufactured by: DIC Corporation

• "EXA4850-150"

Flexible and tough liquid epoxy resin, the number of epoxy groups per molecule: 2, epoxy value: 2.22 mmol/g, product name: EPICLON (registered trademark) EXA4850-150, manufactured by: DIC Corporation

• "YX7400"

Flexible epoxy resin, the number of epoxy groups per molecule: 2, epoxy value: 2.27 mmol/g, product name: jER (registered trademark) YX7400N, manufactured by: Mitsubishi Chemical Corporation

• "Polyetheramine D230"

Polyetheramine (molecular weight 230), product name: POLYETHERAMINE D230, manufactured by: Mitsui Fine Chemicals, Inc.

• "Polyetheramine D2000"

Polyetheramine (molecular weight 2000), product name: POLYETHERAMINE D2000, manufactured by: Mitsui Fine Chemicals, Inc.

[Comparative Example 1]

1. Production of hollow particles C1

First, 50 parts of an epoxy resin (bisphenol A type epoxy resin, product name: jER (registered trademark) 828, manufactured by: Mitsubishi Chemical Corporation) and 50 parts of a hydrophobic solvent (toluene) were mixed and stirred, thereby preparing a mixed solution.
Meanwhile, 15 parts of a curing agent (diethylenetriamine) and 2 parts of a water-soluble emulsifier (sodium dodecylbenzene sulfonate) were added to 390 parts of deionized water, thereby preparing an aqueous phase.
All of the mixed solution obtained above was added to the aqueous phase. The mixture was forcibly emulsified by a ultrasonic homogenizer for 60 minutes, thereby preparing a dispersion in which polymerizable droplets having an average particle diameter of 180 nm were dispersed.
Next, a 20 L polymerization reactor equipped with a stirrer, a jacket, a reflux condenser and a thermometer was prepared, and the polymerization reactor was deoxidized and then subjected to nitrogen purge to replace the inside gas by nitrogen. Then, the obtained dispersion was charged into the polymerization reactor, and the temperature of the polymerization reactor was increased to 80°C to initiate polymerization. The polymerization was kept for 4 hours, followed by a maturing time of one hour. Then, the polymerization reactor was cooled to room temperature.
A slurry thus obtained was dehydrated by a dehydrator. Then, the dehydrated slurry was dried in vacuum, thereby obtaining the hollow particles C1.
The hollow particles C1 correspond to the hollow fine particles (A) used in Example 1 of Patent Document 2.
The resin composition, prepreg and carbon fiber-reinforced molded body (CFRP) of Comparative Example 1 were obtained in the same manner as Example 1, except that instead of the hollow particles 1, the hollow particles C1 were used in "2. Preparation of resin composition (varnish)", "3. Production of prepreg" and "4. Production of carbon fiber-reinforced molded body (CFRP)".

[Comparative Example 2]

The hollow particles C2 of Comparative Example 2 were obtained in the same manner as Comparative Example 1, except that the type and amount of the added epoxy resin, those of the added curing agent, and the amount of the hydrophobic solvent were changed according to Table 1, and the slurry thus obtained was dehydrated as follows by the dehydrator.

<Dehydration by the dehydrator>

The obtained slurry was dehydrated by the dehydrator, thereby obtaining a cake of dehydrated hollow particles. A series of the steps of washing the obtained dehydrated cake with 400 parts of deionized water and dehydrating the washed cake by the dehydrator, was repeated 15 times.

The resin composition, prepreg and carbon fiber-reinforced molded body (CFRP) of Comparative Example 2 were obtained in the same manner as Example 1, except that instead of the hollow particles 1, the hollow particles C2 were used in "2. Preparation of resin composition (varnish)", "3. Production of prepreg" and "4. Production of carbon fiber-reinforced molded body (CFRP)".

[Reference Example 1]

The resin composition, prepreg and carbon fiber-reinforced molded body (CFRP) of Reference Example 1 were obtained in the same manner as Example 1, except that the hollow particles 1 were not added in "2. Preparation of resin composition (varnish)", "3. Production of prepreg" and "4. Production of carbon fiber-reinforced molded body (CFRP)".

[Example 10]

1. Production of hollow particles

Hollow particles 2 were obtained in the same manner as the production of the hollow particles described in Example 2.

2. Preparation of resin composition (varnish)

First, 100 parts of an unsaturated polyester resin (manufactured by: Resonac Corporation, product name: RIGOLAC 158BQT(N), a resin having a hydroxy group at a polymer terminal thereof), 1 part of a curing agent (manufactured by: NOF Corporation, product name: PERMEK N) and 30 parts of toluene were put in a stirring tank and stirred at room temperature for 30 minutes. After the end of the stirring, 25 parts of the hollow particles 2 obtained above were added to the mixture, and the mixture was further stirred for one hour, thereby producing a resin composition (varnish) having a solid content of about 70%.

3. Production of prepreg

A carbon fiber sheet (manufactured by: Mitsubishi Chemical Corporation, product name: TR3110MS, thickness: 200 $\mu$m, weight per unit area: 200 g/m$^2$) cut to a size of 300 mm $\times$ 200 mm was prepared. Next, 25 ml to 30 ml of the resin composition obtained above was applied to the cut sheet.

The carbon fiber sheet to which the resin composition was applied, was hung to cause the excess resin composition to fall under its own weight. Then, the sheet was naturally dried in air. Then, it was dried in a hot air circulation oven at 140°C for 30 minutes, thereby obtaining a prepreg.

4. Production of carbon fiber-reinforced molded body (CFRP)

A SUS plate, a PET film (manufactured by: Nippa Corporation, product name: SFL, thickness: 50 $\mu$m), a stack of two prepregs obtained above, another PET film (manufactured by Nippa Corporation, product name: SFL, thickness: 50 $\mu$m) and another SUS plate were stacked in this order. This stack was fed into a vacuum press machine, and it was heated and pressurized for 20 minutes at 120°C and 0.5 MPa. Then, the heating temperature was further increased to 205°C (4°C/min) and kept at that temperature for one hour. Then, the stack was removed from the vacuum press machine, thereby obtaining a plate-shaped carbon fiber-reinforced molded body (CFRP).

[Example 11]

Hollow particles 6 were obtained in the same manner as the production of the hollow particles described in Example 6.

The resin composition, prepreg and carbon fiber-reinforced molded body (CFRP) of Example 11 were obtained in the same manner as Example 10, except that instead of the hollow particles 2, the hollow particles 6 were used.

[Comparative Example 3]

Hollow particles C1 were obtained in the same manner as the production of the hollow particles described in Comparative Example 1.

The resin composition, prepreg and carbon fiber-reinforced molded body (CFRP) of Comparative Example 3 were obtained in the same manner as Example 10, except that instead of the hollow particles 2, the hollow particles C1 were used.

[Reference Example 2]

The resin composition, prepreg and carbon fiber-reinforced molded body (CFRP) of Reference Example 2 were obtained in the same manner as Example 10, except that the hollow particles 2 were not added in "2. Preparation of resin composition (varnish)", "3. Production of prepreg" and "4. Production of carbon fiber-reinforced molded body (CFRP)".

[Example 12]

1. Production of hollow particles

Hollow particles 2 were obtained in the same manner as the production of the hollow particles described in Example 2.

2. Preparation of resin composition (pellets)

First, 90 parts of a polypropylene resin (manufactured by: Japan Polypropylene Corporation, product name: MA3), 10 parts of a maleic acid-modified polypropylene resin (manufactured by: Sanyo Chemical Industries, Ltd., product name: UMEX 1001, acid value: 26 mgKOH/g) and 25 parts of the hollow particles 2 were mixed together by a blender. Next, a mixture thus obtained was kneaded by a biaxial kneader (product name: TEM-35B, manufactured by: Toshiba Machine Co., Ltd.) in the following condition, extruded and then pelletized, thereby obtaining a pelletized resin composition.

Kneading condition:

Screw diameter: 37 mm, L/D = 32
Screw rotational frequency: 250 rpm
Resin temperature: 190°C
Feed rate: 20 kg/h

3. Production of thermoplastic prepreg

The pelletized resin composition obtained above was melted by heating at 190°C. A carbon fiber sheet (manufactured by: Mitsubishi Chemical Corporation, product name: TR3110MS, thickness: 200 $\mu$m, weight per unit area: 200 g/m$^2$) cut to a size of 300 mm × 200 mm was prepared. Next, 25 ml to 30 ml of the melted resin composition was applied to the cut sheet.

The carbon fiber sheet to which the resin composition was applied, was hung to cause the excess resin composition to fall under its own weight. Then, the sheet was naturally cooled, thereby obtaining a thermoplastic prepreg.

4. Production of carbon fiber-reinforced molded body (CFRP)

A SUS plate, a PET film (manufactured by: Nippa Corporation, product name: SFL, thickness: 50 $\mu$m), a stack of two thermoplastic prepregs obtained above, another PET film (manufactured by Nippa Corporation, product name: SFL, thickness: 50 $\mu$m) and another SUS plate were stacked in this order. This stack was fed into a vacuum press machine, and it was heated and pressurized for 20 minutes at 120°C and 0.5 MPa. Then, the heating temperature was further increased to 205°C (4°C/min) and kept at that temperature for one hour. Then, the stack was removed from the vacuum press machine and naturally cooled, thereby obtaining a plate-shaped carbon fiber-reinforced molded body (CFRP).

[Example 13]

Hollow particles 6 were obtained in the same manner as the production of the hollow particles described in Example 6.
The resin composition, thermoplastic prepreg and carbon fiber-reinforced molded body (CFRP) of Example 13 were obtained in the same manner as Example 12, except that instead of the hollow particles 2, the hollow particles 6 were used.

[Comparative Example 4]

Hollow particles C1 were obtained in the same manner as the production of the hollow particles described in Comparative Example 1.
The resin composition, thermoplastic prepreg and carbon fiber-reinforced molded body (CFRP) of Comparative Example 4 were obtained in the same manner as Example 12, except that instead of the hollow particles 2, the hollow particles C1 were used.

[Reference Example 3]

The resin composition, thermoplastic prepreg and carbon fiber-reinforced molded body (CFRP) of Reference Example 3 were obtained in the same manner as Example 12, except that the hollow particles 2 were not added in "2. Preparation of resin composition (pellets)", "3. Production of thermoplastic prepreg" and "4. Production of carbon fiber-reinforced molded body (CFRP)".

[Measurement of hollow particles]

The hollow particles obtained in Examples 1 to 13 and Comparative Examples 1 to 4 were measured as follows. The results are shown in Tables 1 and 2.

1. Particle diameter and particle size distribution

The particle diameter of the hollow particles was measured by use of a particle size distribution measuring device by the Coulter counter method (product name: MULTISIZER 4e, manufactured by Beckman Coulter, Inc.) Then, the number average and the volume average were calculated therefrom to obtain the number average particle diameter (Dp) and the volume average particle diameter (Dv). By dividing the volume average particle diameter by the number average particle diameter, the particle size distribution (Dv/Dp) of the hollow particles was obtained.
The measurement conditions were as follows.

Aperture diameter: 50 $\mu$m
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Void ratio

2-1. Measurement of apparent density of hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent

density $D_1$ (g/cm$^3$) of the hollow particles was calculated by the following formula (I).

Apparent density $D_1$ = [Mass of the hollow particles]/ (100 - [Mass of the isopropanol]/[Specific gravity of the isopropanol at the measuring temperature])          Formula (I)

2-2. Measurement of the true density of the hollow particles

The hollow particles were pulverized in advance; approximately 10 g of the pulverized hollow particles were introduced into a measuring flask with a volume of 100 cm$^3$; and the mass of the introduced pulverized particles were precisely weighed.

Then, similarly to the measurement of the apparent density mentioned above, isopropanol was added to the measuring flask; the mass of the isopropanol was precisely weighed; and the true density $D_0$ (g/cm$^3$) of the hollow particles was calculated by the following formula (II).

True density $D_0$ = [Mass of the pulverized hollow particles]/(100 - [Mass of the isopropanol]/[Specific gravity of the isopropanol at the measuring temperature])          Formula (II)

2-3. Calculation of void ratio

The void ratio of the hollow particles was calculated by the following formula (III), using the apparent density $D_1$ and the true density $D_0$.

Void ratio (%) = 100 - (Apparent density $D_1$/True density $D_0$) $\times$ 100          Formula (III)

3. Measurement of epoxy group amount

3-1. Measurement of epoxy value

For the hollow particles, in accordance with JIS K 7236, the epoxy value was measured by potentiometric titration. The details of the measurement method were as follows.

First, about 2 g of the sample (the hollow particles) and 30 mL of chloroform were put in a 100 mL conical flask and mixed at room temperature (25°C). In addition, 20 mL of acetic acid, and 10 mL of a tetraethylammonium bromide-acetic acid solution (tetraethylammonium bromide/acetic acid = 25 g/100 mL) as a reaction solution were put in the conical flask. Titration of the obtained solution was carried out with potentiometric titrator AT-710 (product name, manufactured by Kyoto Electronics Manufacturing Co., Ltd.) and a combined glass electrode (manufactured by Kyoto Electronics Manufacturing Co., Ltd.), using a 0.1 mol/L perchloric acid-acetic acid solution as a titrant. An inflection point thus obtained was defined as the end point. Besides this main test, a blank test of a sample solution that was free of the hollow particles was carried out, and the epoxy value of the hollow particles was calculated by the following formula.

$$\text{Epoxy value (mmol/g)} = \{(V_1 - V_0) \times N \times f\} / S$$

S: Mass of the sample (g)
$V_1$: Titrant amount (mL) in the main test
$V_0$: Titrant amount (mL) in the blank test
N: Concentration (mol/L) of the titrant
f: Factor of the titrant

3-2. Measurement of specific surface area

The specific surface area (m$^2$/g) of the hollow particles was obtained by the following formula (B), using the above-measured volume average particle diameter and apparent density $D_1$ of the hollow particles.

Specific surface area (m$^2$/g) = 6/(Volume average particle diameter (m) $\times$ Apparent density $D_1$ (g/m$^3$))

3-3. Calculation of epoxy group amount

The epoxy group amount ($\mu$mol/m$^2$) of the hollow particles per unit area was calculated by the following formula (A), using the epoxy value and specific surface area of the hollow particles.

$$\text{Epoxy group amount } (\mu mol/m^2) = \text{Epoxy value } (\mu mol/g)/ \text{ Specific surface area } (m^2/g) \qquad \text{Formula (A)}$$

A value with two significant digits, whose unit was converted from "mmol/g" to "$\mu$mol/g" in accordance with Rule B of JIS Z 8401:1999, was used as the epoxy value. The epoxy group amount was a value rounded off to one decimal place. Each of the volume average particle diameter and apparent density $D_1$ used in the following formula (B) was a value with two significant digits, whose unit was converted to the above unit. The specific surface area was a value rounded off to two decimal places.

4. Residual surfactant amount

First, 50 ml of ultrapure water and 5 g of the hollow particles were accurately weighed and mixed well. The mixture was subjected to ultrasonic irradiation for 30 minutes and then filtered with a 0.45 $\mu$m syringe membrane filter. The thus-obtained filtrate was freeze-dried, and the thus-obtained residue was mixed with 1 g of tetramethylsilane (TMS) as a solvent and dissolved. Then, $^1$H-NMR measurement was carried out in the following condition. For each of the surfactant and water-soluble polymer stabilizer specified from the $^1$H-NMR spectrum, a calibration curve was prepared based on TMS intensity basis, and the amount of the surfactant and that of the water-soluble polymer stabilizer, both of which were extracted from the surface of the hollow particles, were calculated. The calibration curve was prepared from the TMS intensity and the peak intensity ratio derived from the detected surfactant or water-soluble polymer stabilizer. The proportion of the amount of the surfactant and that of the amount of the water-soluble polymer stabilizer, both of which were extracted from the surface of the hollow particles, with respect to the mass of the hollow particles were calculated and regarded as the content of the surfactant present on the surface of the hollow particles and the content of the water-soluble polymer stabilizer present thereon, respectively.

The particles for which the surfactant and water-soluble polymer stabilizer were not detected from the $^1$H-NMR spectra, were regarded as "not detected (ND)".

<$^1$H-NMR measurement condition>

Device: FT-NMR device
Resonant frequency: 400 MHz
Measurement mode: $^1$H-NMR
Pulse width: 5.0 $\mu$s (Pulse angle: 90°)
Measurement range: 26 ppm (Frequency range: 10500 Hz)
Accumulated number of times: 1024
Measurement temperature: 40°C
Solvent: Deuterated chloroform (TMS (tetramethylsilane) 1%)
Reference material: Tetramethylsilane-derived peak: 0.00 ppm (Internal standard method)

[Measurement of prepreg or CFRP]

The prepregs and carbon fiber-reinforced molded bodies (CFRP) produced in Examples 1 to 13 and Comparative Examples 1 to 4 were measured as follows. The results are shown in Tables 1 and 2.

1. Specific gravity

In accordance with JIS K7112, the specific gravity of the CFRP was measured by the underwater replacement method.

2. Mass-based content of the hollow particles and that of the reinforcing fibers

The prepreg obtained in each of Examples 1 to 13 and Comparative Examples 1 to 4 was cut into a size of 150 mm × 150 mm for use as a measurement prepreg. The mass of the measurement prepreg was measured, and the mass of the carbon fibers in the measurement prepreg was calculated from the weight per unit area ($200 \text{ g/m}^2$) of the carbon fibers. For the measurement prepreg, from the mass of the prepreg and the mass of the reinforcing fibers (carbon fibers) in the prepreg, the content (% by mass) of the resin component in the prepreg was calculated by the formula (1) mentioned above. From the content (% by mass) of the resin component and from the content (% by mass) of the hollow particles in the solid content of the resin composition applied to the reinforcing fibers, the content (% by mass) of the hollow particles was calculated by the formula (2) mentioned above. As the "mass of the fiber-reinforced molded body" in the formula (1), the mass of the measurement prepreg was used.

The content (% by mass) of the reinforcing fibers was calculated as the proportion of the mass of the reinforcing fibers in the measurement prepreg to the mass of the measurement prepreg.

A total of six measurement prepregs were cut from the obtained prepreg. The mass-based content of the hollow particles and the mass-based content of the reinforcing fibers were calculated for the six measurement prepregs. In each of Examples 1 to 13 and Comparative Examples 1 to 4, the mass-based content of the hollow particles in the fiber-reinforced molded body and that of the reinforcing fibers in the fiber-reinforced molded body were each determined as the average of the values calculated for the six measurement prepregs.

The mass-based content of the hollow particles in the prepreg and that of the reinforcing fibers in the prepreg can be equated to the mass-based content of the hollow particles in the CFRP and that of the reinforcing fibers in the CFRP, respectively.

3. Volume-based content of the hollow particles

Using the content (% by mass) of the hollow particles, that of the matrix resin and that of the reinforcing fibers in the measurement prepreg used in the above-described "2. Mass-based content of the hollow particles and that of the reinforcing fibers", the volume of the hollow particles, the volume of the matrix resin and the volume of the reinforcing fibers were calculated by the formulae (3), (4) and (5) mentioned above. The volume-based content (% by volume) of the hollow particles was calculated by the formula (6) mentioned above.

The true density of a cured product of the resin composition produced in Reference Example 1 was measured and used as the "specific gravity (g/cm$^3$) of the cured matrix resin" in the formula (4).

The volume-based content of the hollow particles in the prepreg can be equated to the volume-based content of the hollow particles in the CFRP.

4. Tensile elastic modulus and tensile strength

The CFRP obtained in each example was cut perpendicular to its cloth winding direction to obtain a measurement sample. The measurement sample was cut into a size of 130 mm $\times$ 15 mm so that the cloth winding direction was the short axis direction. The obtained strip was used as a test specimen. In accordance with JIS K 7165:2008, the tensile test of the test specimen was carried out in the following condition to obtain the tensile elastic modulus and tensile strength of the fiber-reinforced molded body.

<Condition of tensile test>

Tester: AG-5kNI (product name, manufactured by Shimadzu Corporation)
Load cell: 5 t
Chuck: Wedge-type chuck
Tensile rate: 1 mm/min
Chuck distance: 60 mm
Temperature: 25°C
Humidity: 50% RH

More specifically, in each example, a total of five strips were cut from the measurement sample and used as test specimens, and the tensile elastic modulus and tensile strength of the five test specimens were measured. From the five tensile elastic moduli thus obtained, the highest and lowest values were excluded, and the average of the remaining three tensile elastic moduli was calculated and determined as the tensile elastic modulus of the CFRP. In the same manner, the tensile strength of the CFRP was obtained.

[Table 1]

Table 1

| | | No. | Example 1 | Example 2 | Example 3 |
|---|---|---|---|---|---|
| | | | Hollow parti-cles 1 | Hollow parti-cles 2 | Hollow parti-cles 3 |
| Hollow particles | Radically poly-merizable monomer | Divinylbenzene | 32.4 | 22.8 | |
| | | Ethylvinylbenzene | 1.3 | 0.9 | |
| | | EGDMA | | | 27.0 |
| | | A-TMMT | | | 6.7 |
| | | Glycidyl methacrylate | 5.0 | 15.0 | 50 |
| | | Percentage (%) of crosslinkable monomer | 83.6 | 58.8 | 87.1 |
| | Polymerization initiator | t-Butylperoxydiethylacetate | 0.89 | 0.89 | 0.89 |
| | Epoxy resin | jER828 | | | |
| | | HP7200 | | | |
| | | HP4700 | | | |
| | | TSR960 | | | |
| | | EXA4850-150 | | | |
| | | YX7400 | | | |
| | | Percentage (%) of crosslinkable epoxy resin | | | |
| | Curing agent | 2-Ethyl-4-methylimidazole | | | |
| | | Ethylenediamine | | | |
| | | Hexamethylenediamine | | | |
| | | Polyetheramine D230 | | | |
| | | Polvetheramine D2000 | | | |
| | | Diethylenetriamine | | | |
| | Hydrophobic solvent | Toluene | | | |
| | | Heptane | 61.3 | 61.3 | |
| | | Cyclohexane | | | 61.3 |
| | Dispersion sta-bilizer | Mg(OH)$_2$ | 10 | 10 | 4 |
| | | Sodium dodecylbenzene sulfonate | | | |
| | Physical prop-erties of parti-cles | Dv ($\mu$m) | 2.3 | 3.3 | 10.1 |
| | | Dp ($\mu$m) | 1.6 | 2.2 | 9 |
| | | Dv/Dp | 1.44 | 1.50 | 1.12 |
| | | Void ratio (%) | 70 | 70 | 70 |
| | | Epoxy group amount ($\mu$mol/m$^2$) | 1.4 | 5.1 | 1.6 |
| | | Residual surfactant amount (ppm) | N.D. | N.D. | N.D. |
| Matrix resin | | Type | Epoxy resin | Epoxy resin | Epoxy resin |

(continued)

|  |  | Example 1 | Example 2 | Example 3 |
|---|---|---|---|---|
| CFRP | Specific gravity | 1.01 | 1.00 | 1.00 |
| | Content (% by mass) of hollow particles | 27 | 27 | 27 |
| | Content (% by volume) of hollow particles | 60 | 60 | 60 |
| | Content (% by mass) of reinforcing fibers | 45 | 45 | 45 |
| | Tensile elastic modulus (GPa) | 16.7 | 19.0 | 17.0 |
| | Tensile strength (MPa) | 454 | 471 | 456 |

|  | Example 1 | Example 2 | Example 3 |
|---|---|---|---|

Table 1-continued (1)

| | | | Example 4 | Example 5 | Example 6 | Example 7 | Example 8 | Example 9 |
|---|---|---|---|---|---|---|---|---|
| | | No. | Hollow particles 4 | Hollow particles 5 | Hollow particles 6 | Hollow particles 7 | Hollow particles 8 | Hollow particles 9 |
| Hollow particles | Radically polymerizable monomer | Divinylbenzene | | | | | | |
| | | Ethylvinylbenzene | | | | | | |
| | | EGDMA | | | | | | |
| | | A-TMMT | | | | | | |
| | | Glycidyl methacrylate | | | | | | |
| | | Percentage (%) of crosslinkable monomer | | | | | | |
| | Polymerization initiator | t-Butylperoxydiethylacetate | | | | | | |
| | Epoxy resin | jER828 | 35.7 | | | | | |
| | | HP7200 | | 35.2 | | | | |
| | | HP4700 | | | 31.5 | | | |
| | | TSR960 | | | | 33.2 | | |
| | | EXA4850-150 | | | | | 33.0 | |
| | | YX7400 | | | | | | 17.4 |
| | | Percentage (%) of crosslinkable epoxy resin | 100.0 | 100.0 | 100.0 | 100.0 | 100.0 | 100.0 |
| | Curing agent | 2-Ethyl-4-methylimidazole | 1.49 | | | | | |
| | | Ethylenediamine | | 2.0 | | | | |
| | | Hexamethylenediamine | | | 5.7 | 4.0 | | |
| | | Polyetheramine D230 | | | | | 4.2 | |
| | | Polyetheramine D2000 | | | | | | 19.8 |
| | | Diethylenetriamine | | | | | | |

|  |  |  | Example 4 | Example 5 | Example 6 | Example 7 | Example 8 | Example 9 |
|---|---|---|---|---|---|---|---|---|
|  | Hydrophobic solvent | Toluene | 62.8 | 62.8 | 62.8 | 62.8 | 62.8 | 62.8 |
|  |  | Heptane |  |  |  |  |  |  |
|  |  | Cyclohexane |  |  |  |  |  |  |
|  | Dispersion stabilizer | $Mg(OH)_2$ | 4 | 4 | 4 | 4 | 4 | 4 |
|  |  | Sodium dodecylbenzene sulfonate |  |  |  |  |  |  |
|  | Physical properties of particles | Dv ($\mu$m) | 12.1 | 18.8 | 8.9 | 9.5 | 12.5 | 13.1 |
|  |  | Dp ($\mu$m) | 10 | 16 | 7.7 | 8.4 | 11 | 10.6 |
|  |  | Dv/Dp | 1.21 | 1.18 | 1.16 | 1.13 | 1.14 | 1.24 |
|  |  | Void ratio (%) | 70 | 70 | 70 | 70 | 70 | 70 |
|  |  | Epoxy group amount ($\mu$mol/m$^2$) | 20.4 | 17.3 | 21.1 | 13.8 | 8.4 | 8.8 |
|  |  | Residual surfactant amount (ppm) | N.D. | N.D. | N.D. | N.D. | N.D. | N.D. |
| Matrix resin |  | Type | Epoxy resin | Epoxy resin | Epoxy resin | Epoxy resin | Epoxy resin | Epoxy resin |
| CFRP |  | Specific gravity | 1.00 | 1.00 | 1.00 | 1.00 | 1.00 | 1.00 |
|  |  | Content (% by mass) of hollow particles | 27 | 27 | 27 | 27 | 27 | 27 |
|  |  | Content (% by volume) of hollow particles | 60 | 60 | 60 | 60 | 60 | 60 |
|  |  | Content (% by mass) of reinforcing fibers | 45 | 45 | 45 | 45 | 45 | 45 |
|  |  | Tensile elastic modulus (GPa) | 21.1 | 20.0 | 21.1 | 20.5 | 19.4 | 19.7 |
|  |  | Tensile strength (MPa) | 533 | 518 | 562 | 508 | 492 | 499 |

Table 1-continued (2)

| | | | Comparative Example 1 | Comparative Example 2 | Reference Example 1 |
|---|---|---|---|---|---|
| Hollow particles | | No. | Hollow particles C1 | Hollow particles C2 | |
| | Radically polymerizable monomer | Divinylbenzene | | | |
| | | Ethylvinylbenzene | | | |
| | | EGDMA | | | |
| | | A-TMMT | | | |
| | | Glycidyl methacrylate | | | |
| | | Percentage (%) of crosslinkable monomer | | | |
| | Polymerization initiator | t-Butylperoxydiethylacetate | | | |
| | Epoxy resin | jER828 | 50.0 | | |
| | | HP7200 | | | |
| | | HP4700 | | 31.5 | |
| | | TSR960 | | | |
| | | EXA4850-150 | | | |
| | | YX7400 | | | |
| | | Percentage (%) of crosslinkable epoxy resin | 100.0 | 100.0 | |
| | Curing agent | 2-Ethyl-4-methylimidazole | | | |
| | | Ethylenediamine | | | |
| | | Hexamethylenediamine | | 5.7 | |
| | | Polyetheramine D230 | | | |
| | | Polyetheramine D2000 | | | |
| | | Diethylenetriamine | 15.0 | | |
| | Hydrophobic solvent | Toluene | 50 | 62.8 | |
| | | Heptane | | | |
| | | Cyclohexane | | | |
| | Dispersion stabilizer | $Mg(OH)_2$ | | | |
| | | Sodium dodecylbenzene sulfonate | 2 | 2 | |
| | Physical properties of particles | Dv ($\mu$m) | 0.19 | 0.35 | |
| | | Dp ($\mu$m) | 0.10 | 0.21 | |
| | | Dv/Dp | 1.90 | 1.67 | |
| | | Void ratio (%) | 50 | 70 | |
| | | Epoxy group amount ($\mu$mol/m$^2$) | 3.1 | 2.2 | |
| | | Residual surfactant amount (ppm) | 500 | 56 | |
| Matrix resin | | Type | Epoxy resin | Epoxy resin | Epoxy resin |

(continued)

|  | | | Comparative Example 1 | Comparative Example 2 | Reference Example 1 |
|---|---|---|---|---|---|
| CFRP | | Specific gravity | 1.32 | 1.15 | 1.48 |
| | | Content (% by mass) of hollow particles | 27 | 27 | - |
| | | Content (% by volume) of hollow particles | 60 | 60 | - |
| | | Content (% by mass) of reinforcing fibers | 45 | 45 | - |
| | | Tensile elastic modulus (GPa) | 15.0 | 15.3 | 16.0 |
| | | Tensile strength (MPa) | 431 | 433 | 443 |

[Table 2]

Table 2

|  | | | | Example 10 | Example 11 | Comparative Example 3 | Reference Example 2 |
|---|---|---|---|---|---|---|---|
| Hollow particles | | No. | | Hollow particles 2 | Hollow particles 6 | Hollow particles C1 | |
| | Radically polymerizable monomer | | Divinylbenzene | 22.8 | | | |
| | | | Ethylvinylbenzene | 0.9 | | | |
| | | | EGDMA | | | | |
| | | | A-TMMT | | | | |
| | | | Glycidyl methacrylate | 15.0 | | | |
| | | | Percentage (%) of crosslinkable monomer | 58.8 | | | |
| | Polymerization initiator | | t-Butylperoxydiethylacetate | 0.89 | | | |
| | Epoxy resin | | jER828 | | | 50.0 | |
| | | | HP7200 | | | | |
| | | | HP4700 | | 31.5 | | |
| | | | TSR960 | | | | |
| | | | EXA4850-150 | | | | |
| | | | YX7400 | | | | |
| | | | Percentage (%) of crosslinkable epoxy resin | | 100.0 | 100.0 | |

(continued)

|  |  |  | Example 10 | Example 11 | Comparative Example 3 | Reference Example 2 |
|---|---|---|---|---|---|---|
|  | Curing agent | 2-Ethyl-4-methylimidazole |  |  |  |  |
|  |  | Ethylenediamine |  |  |  |  |
|  |  | Hexamethylenediamine |  | 5.7 |  |  |
|  |  | Polyetheramine D230 |  |  |  |  |
|  |  | Polyetheramine D2000 |  |  |  |  |
|  |  | Diethylenetriamine |  |  | 15.0 |  |
|  | Hydrophobic solvent | Toluene |  | 62.8 | 50 |  |
|  |  | Heptane | 61.3 |  |  |  |
|  |  | Cyclohexane |  |  |  |  |
|  | Dispersion stabilizer | $Mg(OH)_2$ | 10 | 4 |  |  |
|  |  | Sodium dodecylbenzene sulfonate |  |  | 2 |  |
|  | Physical properties of particles | Dv ($\mu$m) | 3.3 | 8.9 | 0.19 |  |
|  |  | Dp ($\mu$m) | 2.2 | 7.7 | 0.10 |  |
|  |  | Dv/Dp | 1.50 | 1.16 | 1.90 |  |
|  |  | Void ratio (%) | 70 | 70 | 50 |  |
|  |  | Epoxy group amount ($\mu$mol/m$^2$) | 5.1 | 21.1 | 3.1 |  |
|  |  | Residual surfactant amount (ppm) | N.D. | N.D. | 500 |  |
| Matrix resin |  | Type | Unsaturated polyester | Unsaturated polyester | Unsaturated polyester | Unsaturated polyester |
| CFRP |  | Specific gravity | 0.98 | 0.98 | 1.30 | 1.45 |
|  |  | Content (% by mass) of hollow particles | 27 | 27 | 27 | - |
|  |  | Content (% by volume) of hollow particles | 60 | 60 | 60 | - |
|  |  | Content (% by mass) of reinforcing fibers | 45 | 45 | 45 | - |
|  |  | Tensile elastic modulus (GPa) | 7.4 | 8.9 | 4.2 | 7.0 |
|  |  | Tensile strength (MPa) | 90 | 112 | 68 | 80 |

Table 2-continued

|  | Example 12 | Example 13 | Comparative Example 4 | Reference Example 3 |
|---|---|---|---|---|
| No. | Hollow particles 2 | Hollow particles 6 | Hollow particles C1 |  |

(continued)

| | | | Example 12 | Example 13 | Comparative Example 4 | Reference Example 3 |
|---|---|---|---|---|---|---|
| Hollow particles | Radically poly-merizable monomer | Divinylbenzene | 22.8 | | | |
| | | Ethylvinylbenzene | 0.9 | | | |
| | | EGDMA | | | | |
| | | A-TMMT | | | | |
| | | Glycidyl methacrylate | 15.0 | | | |
| | | Percentage (%) of crosslinkable monomer | 58.8 | | | |
| | Polymerization initiator | t-Butylperoxydiethylacetate | 0.89 | | | |
| | Epoxy resin | jER828 | | | 50.0 | |
| | | HP7200 | | | | |
| | | HP4700 | | 31.5 | | |
| | | TSR960 | | | | |
| | | EXA4850-150 | | | | |
| | | YX7400 | | | | |
| | | Percentage (%) of crosslinkable epoxy resin | | 100.0 | 100.0 | |
| | Curing agent | 2-Ethyl-4-methylimidazole | | | | |
| | | Ethylenediamine | | | | |
| | | Hexamethylenediamine | | 5.7 | | |
| | | Polyetheramine D230 | | | | |
| | | Polyetheramine D2000 | | | | |
| | | Diethylenetriamine | | | 15.0 | |
| | Hydrophobic solvent | Toluene | | 62.8 | 50 | |
| | | Heptane | 61.3 | | | |
| | | Cyclohexane | | | | |
| | Dispersion sta-bilizer | $Mg(OH)_2$ | 10 | 4 | | |
| | | Sodium dodecylbenzene sulfonate | | | 2 | |
| | Physical prop-erties of parti-cles | Dv ($\mu$m) | 3.3 | 8.9 | 0.19 | |
| | | Dp ($\mu$m) | 2.2 | 7.7 | 0.10 | |
| | | Dv/Dp | 1.50 | 1.16 | 1.90 | |
| | | Void ratio (%) | 70 | 70 | 50 | |
| | | Epoxy group amount ($\mu$mol/m$^2$) | 5.1 | 21.1 | 3.1 | |
| | | Residual surfactant amount (ppm) | N.D. | N.D. | 500 | |
| Matrix resin | | Type | Modified PP | Modified PP | Modified PP | Modified PP |

(continued)

|  |  | Example 12 | Example 13 | Comparative Example 4 | Reference Example 3 |
|---|---|---|---|---|---|
| CFRP | Specific gravity | 0.96 | 0.96 | 1.29 | 1.40 |
| | Content (% by mass) of hollow particles | 27 | 27 | 27 | - |
| | Content (% by volume) of hollow particles | 60 | 60 | 60 | - |
| | Content (% by mass) of reinforcing fibers | 45 | 45 | 45 | - |
| | Tensile elastic modulus (GPa) | 5.8 | 6.1 | 2.4 | 5.5 |
| | Tensile strength (MPa) | 74 | 89 | 59 | 70 |

Tables 1 and 2 show the amounts (parts by mass) of the added materials and the results of the above measurements.

As a result of SEM observation of the hollow particles obtained in Examples 1 to 13, in all of the examples, the percentage of the number of the particles having only one hollow portion was 90% or more. Of the hollow particles obtained in each of Examples 1 to 13, 3000 particles were randomly selected and examined. As a result, in all of the examples, the mass-based percentage of particles having a circularity of 0.85 or less was 10% by mass or less.

[Consideration]

As shown in Table 1, since the hollow particles used in Comparative Examples 1 and 2 had a volume average particle diameter of 1.0 $\mu$m or less, although the CFRPs obtained by use of the resin compositions of Comparative Examples 1 and 2 were light-weight, they were low in tensile elastic modulus and tensile strength, compared to the CFRP that was free of the hollow particles of Reference Example 1. The reason for the deterioration in the physical properties of the CFRPs of Comparative Examples 1 and 2, is estimated as follows: since the particle diameter of the hollow particles was small, the hollow particles were non-uniformly in the resin composition, and the physical properties of the CFRPs of Comparative Examples 1 and 2 deteriorated, accordingly. Also, the physical properties of the CFRP of Comparative Example 1 further deteriorated compared to the CFRP of Comparative Example 2, and the reason is estimated as follows: in Comparative Example 1, since crosslinking formation by the reaction between the epoxy group of the hollow particles and the epoxy group of the matrix resin, was inhibited by the surfactant remaining on the surface of the hollow particles, the adhesion between the hollow particles and the matrix resin deteriorated, and the physical properties of the CFRP were further deteriorated, accordingly.

In each of the examples shown in Table 1, the CFRP was produced by use of the resin composition which contained hollow particles having a void ratio of 50% or more, a volume average particle diameter of more than 1.0 $\mu$m and 20.0 $\mu$m or less and an epoxy group amount of 1.0 $\mu$mol/m$^2$ or more, and the epoxy resin as the matrix resin. Accordingly, the CFRPs produced in the examples were light-weight, and they were high in tensile elastic modulus and tensile strength, compared to the CFRP that was free of the hollow particles of Reference Example 1. The reason for the improvement in the physical properties of the CFRPs of the examples, is estimated as follows: the physical properties of the CFRPs of the examples were improved since a deterioration in the physical properties of the CFRPs due to the aggregation of the hollow particles and a deterioration in the physical properties thereof due to the peeling off of the interface between the hollow particles and the matrix resin, were suppressed, and since the tensile elastic modulus and tensile strength of the added hollow particles were high compared to the matrix resin.

In Examples 4 to 9 in which the epoxy resin was used as the polymerizable compound in the production of the hollow particles, the tensile elastic modulus and tensile strength of the obtained CFRPs were high compared to Examples 1 to 3 in which the radically polymerizable monomer was used as the polymerizable compound. The reason for the high tensile elastic modulus and tensile strength of Examples 4 to 9 is estimated as follows: in Examples 4 to 9, since the epoxy group amount of the hollow particles was increased due to the use of the epoxy resin as the polymerizable compound, more crosslinks were formed by the reaction between the epoxy group of the hollow particles and the epoxy group of the matrix resin and improved the adhesion between the hollow particles and the matrix resin, and the high tensile elastic modulus and tensile strength were obtained, accordingly.

In each of the examples and comparative examples shown in Table 2, the same hollow particles as those of Example 2, Example 6 or Comparative Example 1 shown in Table 1 were used, and the unsaturated polyester resin or modified polyolefin resin was used as the matrix resin containing the functional group which is reactive with an epoxy group. In the examples and comparative example using the unsaturated polyester resin, the prepreg and the CFRP were produced in the same manner as the examples and comparative examples shown in Table 1. Meanwhile, in the examples and comparative example using the modified polyolefin resin, the thermoplastic prepreg was produced by use of the pelletized resin composition, and the CFRP was produced by use of the thermoplastic prepreg.

As a result, the examples and comparative examples shown in Table 2 showed the same tendency as the examples and comparative examples shown in Table 1. More specifically, although the CFRP produced by use of the resin composition containing the same hollow particles as Comparative Example 1 was light-weight, it was low in tensile elastic modulus and tensile strength, compared to the CFRP that was free of hollow particles. The CFRP produced by use of the resin composition containing the same hollow particles as Example 2 or 6 was light-weight, and it was high in tensile elastic modulus and tensile strength, compared to the CFRP that was free of hollow particles. In addition, in the examples in which the epoxy resin was used as the polymerizable compound in the production of the hollow particles, the tensile elastic modulus and tensile strength of the obtained CFRP were high compared to the examples in which the radically polymerizable monomer was used as the polymerizable compound.

Reference Signs List

1. Aqueous medium
2. Low polarity material
3. Polymerizable droplet
4a. Hydrophobic solvent
4b. Material not containing hydrophobic solvent
5. Precursor particle
6. Shell
7. Hollow portion
10. Hollow particles
11. Stirring tank
12. Supply tank
13a, 13b, 13c. Gas inlet
14. Outlet
15. Spray mechanism
16. Supply line to stirring tank
17a, 17b. Circulation line
20. Precursor composition
20a. Liquid surface of precursor composition
21. Vapor phase

**Claims**

1.   A resin composition comprising hollow particles and a matrix resin,

wherein the hollow particles comprise a shell containing a resin and a hollow portion surrounded by the shell; the hollow particles have a void ratio of 50% or more; the hollow particles have a volume average particle diameter of more than 1.0 $\mu$m and 20.0 $\mu$m or less; and the hollow particles have an epoxy group amount per unit area of 1.0 $\mu$mol/m$^2$ or more, which is obtained from an epoxy value and specific surface area of the hollow particles by the following formula (A):

Epoxy group amount ($\mu$mol/m$^2$) = Epoxy value ($\mu$mol/g)/ Specific surface area (m$^2$/g)          Formula (A),

and
wherein the matrix resin comprises a matrix resin containing a functional group which is reactive with an epoxy group.

2.   The resin composition according to Claim 1, wherein the functional group of the matrix resin is at least one selected from the group consisting of a hydroxy group, an amino group, an epoxy group, a carboxy group, a carboxylic anhydride group, a thiol group, an isocyanate group and a silanol group.

3. The resin composition according to Claim 1 or 2, wherein the matrix resin comprises at least one selected from the group consisting of an epoxy resin, a benzoxazine resin, a cyanate resin, a polyimide resin, a silicone resin, a polyester resin, a liquid crystal polymer (LCP), a modified polyolefin resin, a polyphenylene ether resin, a thiol resin, a polyurethane resin, a polyurea resin and raw material compounds thereof.

4. The resin composition according to Claim 1 or 2, wherein the shell of the hollow particles contains, as the resin, a polymer of a radically polymerizable monomer.

5. The resin composition according to Claim 4, wherein, in 100% by mass of the radically polymerizable monomer, a content of a crosslinkable monomer containing two or more radically polymerizable groups per molecule, is 50% by mass or more.

6. The resin composition according to Claim 1 or 2, wherein the shell of the hollow particles contains, as the resin, a cured product of an epoxy resin.

7. The resin composition according to Claim 6, wherein, in 100% by mass of the epoxy resin, a content of a crosslinkable epoxy resin containing two or more epoxy groups per molecule, is 50% by mass or more.

8. The resin composition according to Claim 1 or 2, wherein a total content of a surfactant and water-soluble polymer stabilizer present on a surface of the hollow particles, is 100 ppm or less.

9. A prepreg obtained by impregnating a substrate with the resin composition defined by Claim 1 or 2 and heat-drying the resin composition of the substrate.

10. A thermoplastic prepreg obtained by impregnating a substrate with the resin composition defined by Claim 1 or 2.

11. A molded body comprising a cured product of the resin composition defined by Claim 1 or 2.

FIG. 1

FIG. 2

## INTERNATIONAL SEARCH REPORT

| International application No. |
| --- |
| **PCT/JP2024/004742** |

| | |
| --- | --- |
| **A. CLASSIFICATION OF SUBJECT MATTER** | |
| *C08L 101/02*(2006.01)i; *C08J 5/24*(2006.01)i; *C08L 63/00*(2006.01)i<br>FI:   C08L101/02; C08L63/00 A; C08J5/24 CEZ | |
| According to International Patent Classification (IPC) or to both national classification and IPC | |

| **B. FIELDS SEARCHED** |
| --- |
| Minimum documentation searched (classification system followed by classification symbols)<br>C08L101/02; C08J5/24; C08L63/00 |
| Documentation searched other than minimum documentation to the extent that such documents are included in the fields searched<br>Published examined utility model applications of Japan 1922-1996<br>Published unexamined utility model applications of Japan 1971-2024<br>Registered utility model specifications of Japan 1996-2024<br>Published registered utility model applications of Japan 1994-2024 |
| Electronic data base consulted during the international search (name of data base and, where practicable, search terms used)<br>Japio-GPG/FX |

| **C. DOCUMENTS CONSIDERED TO BE RELEVANT** | | |
| --- | --- | --- |
| Category* | Citation of document, with indication, where appropriate, of the relevant passages | Relevant to claim No. |
| A | WO 2016/111314 A1 (SEKISUI PLASTICS CO., LTD.) 14 July 2016 (2016-07-14) | 1-11 |
| A | WO 2021/112117 A1 (ZEON CORPORATION) 10 June 2021 (2021-06-10) | 1-11 |
| A | WO 2021/112110 A1 (ZEON CORPORATION) 10 June 2021 (2021-06-10) | 1-11 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 April 2024** | **23 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004742**

| Patent document cited in search report | | | Publication date (day/month/year) | Patent family member(s) | | | Publication date (day/month/year) |
|---|---|---|---|---|---|---|---|
| WO | 2016/111314 | A1 | 14 July 2016 | US | 2017/0114243 | A1 | |
| | | | | EP | 3162434 | A1 | |
| | | | | KR | 10-2017-0012380 | A | |
| | | | | CN | 106488802 | A | |
| WO | 2021/112117 | A1 | 10 June 2021 | US | 2022/0355264 | A1 | |
| | | | | CN | 114761440 | A | |
| WO | 2021/112110 | A1 | 10 June 2021 | US | 2022/0410111 | A1 | |
| | | | | EP | 4071187 | A1 | |
| | | | | CN | 114729088 | A | |
| | | | | KR | 10-2022-0114530 | A | |

Form PCT/ISA/210 (patent family annex) (July 2022)

54

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5992598 B

- JP 4955960 B

**Non-patent literature cited in the description**

- Kagaku Binran, Kiso Hen, Kaitei 4 Ban. Maruzen Publishing Co., Ltd, 30 September 1993, 498-503